# EUROPEAN PATENT APPLICATION

(11) **EP 4 553 596 A1**
(43) Date of publication of application: **14.05.2025**
(21) Application number: 24209392.0
(22) Date of filing: 29.10.2024
(51) Int. Cl.: G05B 19/4099, G05B 19/418, G05B 13/02

(54) **SYSTEMS AND METHODS TO CLASSIFY, REPORT, AND ADJUST BEHAVIOR VARIATION IN ADDITIVE MANUFACTURING MACHINE FLEET**

(30) Priority: 06.11.2023 US 202363596486 P; 22.10.2024 US 202418923308
(71) Applicant: General Electric Company, Cincinnati, Ohio 45215 (US); GE Avio S.r.l., 10040 Rivalta di Torino (TO) (IT)
(72) Inventor: Tenkayyagaari, Srikanth Reddy, 560066 Karnataka, Bengaluru (IN); Schipani, Claudia, 10040 Rivalta di Torino (IT); Ponnada, V S S Srivatsa, 560066 Karnataka, Bengaluru (IN); Foster, Chad R., West Chester, Ohio (US)
(74) Representative: Hafner & Kohl PartmbB

(57) **Abstract**

Apparatus and associated methods to classify and adjust builds across additive manufacturing machine(s) are disclosed. An example apparatus includes learner circuitry (620) to: process first data from a set of first builds to learn behavior; classify each build as a standard or non-standard build; model the learned behavior to form a standard reference behavior and a non-standard reference behavior, the standard reference behavior including first features and the non-standard reference behavior including second features; and output the standard reference behavior and the non-standard reference behavior to classify additional builds. The apparatus includes evaluator circuitry (630) to: ingest second data for a second build; process the second data in comparison to the standard reference behavior and the non-standard reference behavior; classify the second build as a standard build or a non-standard build; and, when the second build is classified as a non-standard build, output a corrective action.

## Description

### CROSS-REFERENCE TO RELATED APPLICATION

The present application claims priority to U.S. Provisional Patent Application Number 63/596,486, filed on November 6, 2023. U.S. Provisional Patent Application Number 63/596,486 is incorporated by reference in its entirety herein for all purposes.

### FIELD

The present disclosure relates to systems, and methods for monitoring an additive manufacturing device, and more specifically, for monitoring, analyzing, and adjusting build-to-build and fleet-level additive manufacturing machines and associated processes.

### BACKGROUND

In additive manufacturing processes such as melting of a powder layer to create an article, there exist some challenges to diagnose aborted or failed builds or identify performance issues of an additive manufacturing device. Specifically, an expert has to manually diagnose a build or the device, which requires a significant amount of time and human labor. In addition, finding a root cause of a failure of the additive manufacturing device is a difficult and time-consuming process, which is more or less impossible during a build. Even between builds, reliability and repeatability is a customer expectation. Failure to meet this expectation rendered individual additive manufacturing machines, as well as a fleet of such additive manufacturing machines, ineffective at best and useless at worst. Thus, there is an unmet need for improved reliability of machines and builds and repeatability of builds in a fleet of additive manufacturing machines.

### BRIEF DESCRIPTION OF THE DRAWINGS

FIG. 1 depicts an additive manufacturing system of the present disclosure, according to one or more examples shown and described herewith.
FIG. 2 is a block diagram of an example system according to one or more examples shown and described herein.
FIG. 3 depicts various internal components of a control component of an additive manufacturing system, according to one or more examples shown and described herein.
FIG. 4 depicts the various internal components of a user computing device communicating with an additive manufacturing system, according to one or more examples shown and described herein.
FIG. 5 illustrates an example infrastructure or framework to monitor and adjust additive manufacturing based on machine health monitoring and analysis.
FIG. 6 illustrates an example additive manufacturing machine behavior apparatus or infrastructure.
FIG. 7 illustrates an additional example view of the additive manufacturing machine behavior apparatus of FIG. 6.
FIG. 8 illustrates an additional example view of the additive manufacturing machine behavior apparatus of FIG. 6.
FIG. 9 depicts an example output population of builds tagged for behavior.
FIGS. 10-12 are flow diagrams representative of example hardware logic, machine readable instructions, hardware implemented state machines, and/or any combination thereof for implementing the example additive manufacturing machine behavior apparatus of FIGS. 6-8.
FIGS. 13-15 are block diagrams of an example processor platform and associated circuitry structured to execute the instructions of FIGS. 10-12 to implement the example additive manufacturing machine behavior apparatus of FIGS. 6-8.

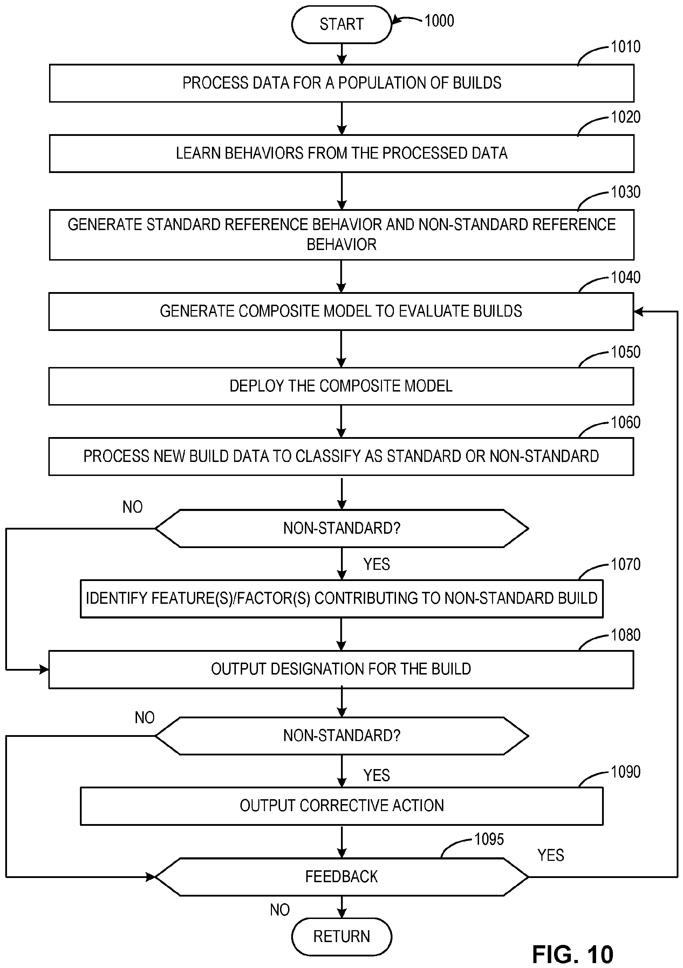

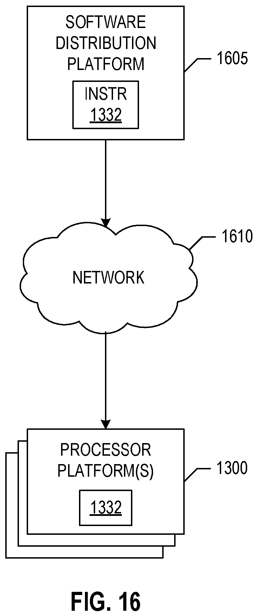

FIG. 16 is a block diagram of an example software/firmware/instructions distribution platform (e.g., one or more servers) to distribute software, instructions, and/or firmware (e.g., corresponding to the example machine readable instructions of FIGS. 10-12) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. Instead, the thickness of the layers or regions may be enlarged in the drawings. In general, the same reference numbers will be used throughout the drawing(s) and accompanying written description to refer to the same or like parts. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" with another part means that there is no intermediate part between the two parts.

Descriptors "first," "second," "third," etc. are used herein when identifying multiple elements or components which may be referred to separately. Unless otherwise specified or understood based on their context of use, such descriptors are not intended to impute any meaning of priority, physical order, or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Additive manufacturing is a process by which a three-dimensional structure is built, usually in a series of layers, based on a digital model of the structure. While some examples of additive manufacturing technology rely on sintering or melting/fusing using an energy source to form the structure, rather than "printing", in which material is deposited at select locations, the term "print" is often used to describe the additive manufacturing process (e.g., three-dimensional (3D) printing, 3D rapid prototyping, etc.). Examples of additive manufacturing techniques include Fused Deposition Modeling, Electron Beam Melting, Laminated Object Manufacturing, Selective Laser Sintering (including Direct Metal Laser Sintering, also referred to as Direct Metal Laser Melting or Selective Laser Melting), Digital Light Processing, and Stereolithography, among others. Although 3D printing technology is continually developing, the process to build a structure layer-by-layer is complex, inefficient, and prone to failure. An error in the 3D process can lead to weakness or failure in the manufactured part and, therefore, waste, risk, and other unreliability.

The phrase "additive manufacturing apparatus" is used interchangeably herein with the phrase "printing apparatus" and term "printer", and the term "print" is used interchangeably herein with the word "build", referring to an action to build a structure using an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Additive manufacturing systems may use an electron-beam or a laser beam to manufacture builds, for example. Additive manufacturing systems may include multiple electron-beam guns or laser designs. Examples of additive manufacturing or printing techniques include Fused Deposition Modeling, Electron Beam Melting, Laminated Object Manufacturing, Selective Laser Sintering (including Direct Metal Laser Sintering also referred to as Direct Metal Laser Melting or Selective Laser Melting), and Stereolithography among others.

For example, selective laser melting (SLM), also known as direct metal laser melting (DMI,M), Direct Metal Laser Sintering (DMI,S), or laser powder bed fusion (LPBF), is a rapid prototyping, 3D printing, or additive manufacturing (AM) technique designed to use a high power-density laser to melt and fuse metallic powders together. The SLM process can fully melt the metal material into a solid three-dimensional part, for example.

SLM is a part of additive manufacturing in which a high power density laser is used to melt and fuse metallic powders together. With SLM, thin layers of atomized fine metal powder are evenly distributed onto a substrate plate (e.g., a metal, etc.) using a coating mechanism. The substrate plate is fastened to an indexing table that moves in the vertical (Z) axis. This takes place inside a chamber containing a tightly controlled atmosphere of inert gas, either argon or nitrogen at oxygen levels below 500 parts per million, for example. Once each layer has been distributed, each two-dimensional (2D) slice of the part geometry is fused by selectively melting the powder. Melting of the powder is accomplished with a high-power laser beam, such as an ytterbium (Yb) fiber laser with hundreds of watts, etc. The laser beam is directed in the X and Y directions with two high frequency scanning mirrors. The laser energy is intense enough to permit full melting (welding) of the particles to form solid metal. The process is repeated layer after layer until the part is complete.

Direct Metal Laser Melting (DMI,M) or Direct Metal Laser Sintering (DMI,S) are particular type(s) of SLM that use a variety of alloys and allows prototypes to be functional hardware made out of the same material as production components. Since the components are built layer by layer, it is possible to design organic geometries, internal features, and challenging passages that could not be cast or otherwise machined. For example, DMI,S produces strong, durable metal parts that work well as functional prototypes and/or end-use production parts, for example.

Objects are built directly from a file generated from CAD (computer-aided design) data. The DMI,S process begins by slicing 3D CAD file data into layers (e.g., from 20 to 100 micrometers thick, 30-120 µm thick, 50-150 µm thick, etc.), creating a two-dimensional (2D) image of each layer. For example, a format of the 3D CAD file is a .stl file used on most layer-based 3D printing or stereolithography technologies. This file is then loaded into a file preparation software package that assigns parameters, values and physical supports that allow the file to be interpreted and built by different types of additive manufacturing machines, for example.

In DMLS/DMLM, use of a laser to selectively melt thin layers of tiny particles yields objects exhibiting fine, dense, and homogeneous characteristics. The DMLS machine uses a high-powered 200 watt Yb-fiber optic laser, for example. The machine includes a build chamber area including a material dispensing platform and a build platform along with a re-coater blade used to move new powder over the build platform. The technology fuses metal powder into a solid part by melting it locally using the focused laser beam. A melt pool is formed when the powder melts from exposure to the laser beam radiation. Parts are built up additively layer by layer (e.g., using layers 10 micrometers thick, 20 µm thick, 30 µm thick, 50 µm thick, etc.).

The DMI,S process begins with a roller spreading a thin layer of metal powder on the print bed. Next, a laser is directed based on the CAD data to create a cross-section of the object by completely melting metal particles. The print bed is then lowered so the process can be repeated to create the next object layer. After all the layers are printed, the excess unmelted powder is brushed, blown, or blasted away. The object typically requires little, if any, finishing.

The machine can include and/or operate with monitoring and control systems and methods, such as iterative learning control, continuous autocalibration, and real-time melt pool monitoring, etc., to introduce a step change in the build process performance and stability, for example. Certain examples enable melt pool monitoring, iterative learning control, continuous auto-calibration, real-time melt pool control, filter monitoring, pump monitoring, jet application monitoring, cathode and beam monitoring, etc.

Other additive manufacturing methods, such as Electron Beam Melting (EBM), can be used for crack-prone metal alloys, such as titanium, etc. With EBM, high-performance electron beam sources and in-situ process monitoring using "self-generated" x-ray imaging and backscatter electron technologies can be used for improved quality control. A binder jet allows fast printing at lower cost with novel support structure designs and clean-burning binders to solve two key technology challenges of sintering distortion and material properties to enable additive manufacturing for automotive, other transportation solutions, powder generation, etc. EBM utilizes a raw material in the form of a metal powder or a metal wire, which is placed under a vacuum (e.g., within a vacuum sealed build chamber). Generally speaking, the raw material is fused together from heating via an electron beam.

Systems that utilize EBM generally obtain data from a 3D computer-aided design (CAD) model and use the data to place successive layers of the raw material using an apparatus to spread the raw material, such as a powder distributor. The successive layers are melted together utilizing a computer-controlled electron beam. As noted above, the process takes place under vacuum within a vacuum sealed build chamber, which makes the process suited to manufacture parts using reactive materials having a high affinity for oxygen (e.g., titanium). In certain examples, the process operates at higher temperatures (up to about 1,200 °C) relative to other additive manufacturing processes, which can lead to differences in phase formation though solidification and solid-state phase transformation.

Examples described herein are applicable to other additive manufacturing modalities employing other types of additive manufacturing devices beyond those disclosed herein. For example, directed energy deposition (DED), direct ceramic, BinderJet, stereolithography, photopolymerization, etc., can benefit from the monitoring, analysis, and correction described herein.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

As used herein, the terms "system," "unit," "module," "engine," "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hardwired logic of the device. Various modules, units, engines, and/or systems shown in the attached figures may represent the hardware that operates based on software or hardwired instructions, the software that directs hardware to perform the operations, or a combination thereof.

The present disclosure generally relates to devices, systems, and methods for monitoring, determining, and adjusting health of an additive manufacturing device (also referred to as an additive manufacturing machine), a fleet of additive manufacturing devices, and/or an associated process, build, etc. A build involves formation of a part (e.g., a blade, a rotor, a stator, a trunnion, a case, a shroud, other industrial component, etc.) by an additive manufacturing machine, for example. Example systems and methods obtain data for a build, process, machine configuration, etc., and ingest, fuse, analyze, and aggregate the data for state determination and analysis. Such methods may include consideration and analysis of actual sensor data from machine or process, as well as metadata derived from statistical process control and/or other quality scoring, for example. Certain examples determine build, process, and/or machine health, on a layerwise and/or overall basis without requiring manual analysis. In addition, the systems and methods according to the present disclosure enhance the accuracy of diagnosing builds and/or additive manufacturing devices to provide actionable output (e.g., to correct a build, adjust an additive manufacturing device and/or associated process, etc.).

Certain examples provide apparatus, systems, and methods to analyze and assess behavior variations within a fleet of additive manufacturing machines. An automatic system enables learning the behavior variation of the fleet and identifying non-standard builds. Certain examples can be deployed on and/or separate from an additive manufacturing machine. When deployed on an additive manufacturing machine, the system/method enables detecting critical/non-standard builds by the additive manufacturing machine while a part is being printed and/or as soon as the part is printed to anticipate scrap, foresee ad-hoc incremental controls/inspection, and enable focused action across the fleet to contain the variation and improve production yield.

In certain examples, an analyzer system (e.g., a standard behavior analyzer or SBA) is set up to read in parameters and/or features representing various processes executed by an additive manufacturing machine during a build of a part. The analyzer system includes learner subsystem circuitry and evaluator subsystem circuitry. The learner subsystem reads in logfiles and/or other data (e.g., controls, sensor, and/or subsystem data from machine components, etc.) of a given population of builds and learns behavior of the associated additive manufacturing machine(s) through a relative or comparative analysis(-ses) of that population of builds using unsupervised machine learning and statistical methods, for example. Such analyses enable identification of non-standard build(s) within the analyzed population of builds and determination of machine parameter(s) that led to the non-standard behavior (and to the standard behavior). As used herein, standard behavior is indicative of a build and/or related process, additive manufacturing machine configuration, etc., that complies with a desired result (e.g., a target or minimum part quality, etc.), an acceptable build output, other expected outcome, etc. A non-standard behavior is indicative of a build and/or related process, additive manufacturing machine configuration, etc., that does not comply (e.g., does not satisfy or falls outside of, etc.) a desired result, an acceptable build output, other expected outcome, etc.

However, in certain examples disclosed herein, non-standard can also indicate anomalous behavior that is not necessarily "bad" or of insufficient quality. Instead, non-standard process behavior can also be due to more streamlined/optimized/better processes introduced by new/tweaked parameters or settings or methods. Therefore, an outlier build may not necessarily indicate a suboptimal build. Additive manufacturing development processes rely on and benefit from in-situ quality assurance technologies, not only for corrective purposes but also for identifying opportunities for (continuous) improvements. As such, a non-standard build, identified based on detection of an anomaly, does not have to indicate a "defect" in the build per se.

In certain examples, behavior (standard and/or non-standard) learned by the learner subsystem is saved in digital form to be later used by the evaluator subsystem. A new build can then be evaluated against the saved learned behavior of the population of builds to assess if the new build is non-standard, quantify the behavior of the new build, and identify one or more machine parameters, build settings, etc., that led to such (non-standard or standard) behavior. Variation from standard build/machine behavior can include key/critical data from build preparation, settings/configuration, as well as facility inputs (e.g., facility gas/water/power), etc., and can be evaluated at the machine level, subsystem level (e.g., beam subsystem, etc.), etc. An associated process can be automated and employed with respect to various build populations (e.g., all builds in the past six months, all builds of a given type in the past three months, all builds on a given additive manufacturing machine type over the past year, etc.). Such systems and methods can be implemented for any additive manufacturing machine fleet (DMI,M, EBM, BinderJet, etc.).

Using systems, apparatus, and methods described herein, non-standard and/or other anomalous additive manufacturing machine behavior can be identified using a population of builds, and such behavior can be quantified/measured with a metric to enable comparison with other build/machine behavior, identify a parameter-level contribution such that one or more most important/impactful parameters leading to the non-standard behavior can be determined. Identification of parameter(s), setting(s), etc., enables specific actions to be taken to contain the variation in machine behavior and, thus, reduce a number/amount of quality defects that arise out of such variation, for example. Such analysis can also reduce or eliminate `bad WIP' (work in progress) from entering expensive post-production processes (e.g., stress relief, heat treat, computed tomography (CT) inspection, etc.) and/or can inform such processes as Inspection Advice (variation identified in layer 1xx-2yy), etc.

Parameter limits defining standard behavior can be learned from a given population of builds. Standard behavior can be learned at the build level and at the layer level (e.g., from evaluation of layers in each of the population of builds (e.g., standard melt time at layer level, etc.). A layerwise evaluation of standard behavior enables identification of specific layers contributing to non-standard behavior/results, for example. Anomalous layers can be identified in a build when compared with a population of builds (e.g., layers with an anomalous melt time, etc.) to serve as part of build level non-standard behavior.

In certain examples, using unsupervised learning does not necessarily imply that a standard versus non-standard classification aligns to good/critical quality. Nevertheless, an unsupervised learning model provides a mechanism to isolate non-standard process behavior, which supports upfront identification and possibly containment of abnormal, anomalous, or otherwise incorrect process behavior, such as through recommended corrective action(s) to halt/adjust process variability that may, if uncorrected, lead to systematic or random undesired process results. In certain examples, classification of a build as standard or non-standard and associating the classification with an indication of good or critical quality includes comparison of quality data (e.g., CT, others) combined to a complementary supervised learning step to fine-tune the classification algorithm to, for example, further distinguish within the standard group of builds or layers or features ranges to identify what is considered "good" from a quality perspective.

As such, critical builds and/or associated additive manufacturing machines can be identified as soon as a part is printed. This identification enables scrap to be anticipated, ad-hoc incremental controls/inspection to be predicted, etc. Such identification can also be performed layerwise when a layer is compared to a reference/golden build, leveraging information from analytics processor, etc.

Additive manufacturing machine behavior during each build of a population can be represented by a set of strong domain-based features, SPC quality scoring, etc. A given population of builds is analyzed using a novel combination of unsupervised machine learning methods (e.g., k-NN anomaly detection + HDBScan Clustering, etc.), and statistical univariate models are employed to assess and find critical/non-standard builds as well as operating limits of standard build/machine behavior. These methods combine to capture a non-linear interaction of features and resulting effect on build/machine behavior. Variation can be measured at a feature-level, for example. Further, a novel aggregated metric (referred to herein as non-compliance severity) is devised to measure the variation at build and feature levels. This non-compliance severity metric identifies key features contributing to non-standard behavior. Learned population behavior can be saved in a database and deployed to enable detection on a new build, for example.

Certain examples provide a method of classifying machine behavior during a build in additive manufacturing machine by integrating and/or disintegrating build data (e.g., power usage, ambient temperature, etc.), layer data (e.g., pool melt temperature, vacuum level, etc.), and machine data (e.g., settings of the additive manufacturing machine, etc.) into aggregate build feature(s) to bring in a high fidelity machine process based representation of machine behavior during the build. Non-linear (e.g., clustering (DBScan), neural-net, random forest, k-means, etc.), linear (mahalanobis distance, hoteling T, control chart, etc.), multivariate, and/or univariate methods can be used individual or in various combinations to classify a build as standard or critical/non-standard and further to make build-level behavior/quality estimates and feature-level behavior estimates. The non-compliance severity (NCS) is an aggregated metric to measure/quantify the behavior variation of an additive manufacturing machine during a build. The NCS metric can further be disintegrated to a feature level to build possible causal relationships between features, which enables identification of features contributing the most towards the identified behavior. The NCS metric can be used for compliance and issue resolution for a part built on the additive manufacturing machine.

Certain examples provide a system to classify and report machine behavior in an additive manufacturing machine. The system includes an automated learner subsystem, deployed in a shared computer connected to multiple additive manufacturing machines. The automated learner subsystem can read in a population of builds represented with features. The automated learner subsystem learns a behavior from a population of builds from one or multiple additive manufacturing machines and can classify each build and measure the behavior of each build. The automated learner subsystem can learn layer-level behavior variation, can learn online and offline modes at a desired frequency, and can learn from real and/or simulation data from the additive manufacturing machines. The automated learner subsystem can report the behavior classification of each build, features contributing to the behavior, limits of features, layer level behavior, etc., and can generate an interactive display as well as generate actions that can be taken to reduce behavior variation. Learned behavior can be saved as a reference behavior in a data store (e.g., for future evaluation on new builds), for example.

The system also includes an automated evaluator subsystem. The automated evaluator subsystem can be deployed in each additive manufacturing machine, for example. The automated evaluator system can read in new build(s) represented with features and evaluate a new build against one or multiple reference/learned behaviors to classify behavior associated with the new build. The build can be evaluated at a build level and at a layer level, for example. Evaluation can be generated and reported as soon as the build is completed. The report can detail classification of the layer(s) and/or build as standard/non-standard as well as features contributing to the classification, and the report can trigger ad-hoc incremental controls, inspection, other adjustment to correct for a non-standard behavior, for example. In certain examples, sensitivity(-ies) can be set (e.g., automatically and/or manually via sliders, ranges, values, etc.) to set certain thresholds higher, lower, to particular custom ranges/tolerances, etc.

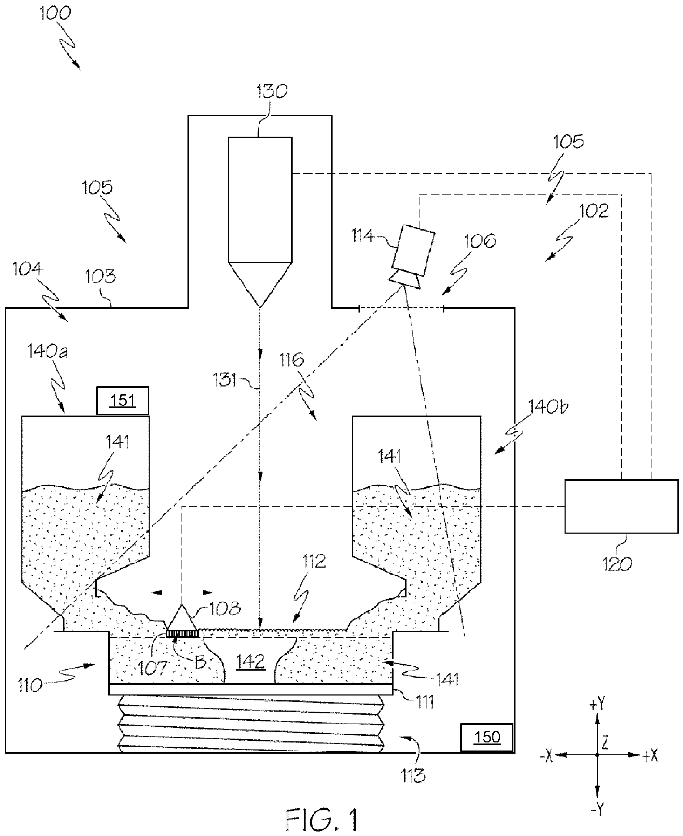

FIG. 1 depicts an additive manufacturing device of the present disclosure, according to one or more examples shown and described herewith. As shown in FIG. 1, an additive manufacturing system 100 (also referred to herein as an additive manufacturing device, an additive manufacturing machine, an additive machine, etc.) includes at least a build chamber 102, an imaging device 114, and a control component 120. The build chamber 102 defines an interior 104 that is separated from an exterior environment 105 via one or more chamber walls 103. In some examples, at least a portion of the one or more chamber walls 103 of the build chamber 102 may include a window 106 therein. The imaging device 114 is generally located adjacent to the build chamber 102 in the exterior environment 105 (i.e., not located within the interior 104 of the build chamber 102), and is arranged such that a field of view 116 of the imaging device 114 extends through the window 106 into the interior 104 of the chamber.

In some examples, the interior 104 of the build chamber 102 may be a vacuum sealed interior such that an article 142 formed within the build chamber 102 is formed under optimal conditions for EBM or DMI,M, as is generally understood. The build chamber 102 is capable of maintaining a vacuum environment via a vacuum system. Illustrative vacuum systems may include, but are not limited to, a turbo molecular pump, a scroll pump, an ion pump, and one or more valves, as are generally understood. In some examples, the vacuum system may be communicatively coupled to the control component 120 such that the control component 120 directs operation of the vacuum system to maintain the vacuum within the interior 104 of the build chamber 102. In some examples, the vacuum system may maintain a base pressure of about 1×10⁻⁵ mbar or less throughout an entire build cycle. In further examples, the vacuum system may provide a partial pressure of He or other reactive or inert control gas to about 2×10⁻³ mbar during a melting process.

In other examples, the build chamber 102 may be provided in an enclosable chamber provided with ambient air and atmosphere pressure. In yet other examples, the build chamber 102 may be provided in open air.

The build chamber 102 generally includes within the interior 104 a powder bed 110 supporting a powder layer 112 thereon, as well as a powder distributor 108. In some examples, the build chamber 102 may further include one or more raw material hoppers 140a, 140b that maintain raw material 141 therein. In some examples, the build chamber 102 may further include an emitter 130. The build chamber 102 may further include other components, particularly components that facilitate EBM or DMI,M, including components not specifically described herein.

The powder bed 110 is generally a platform or receptacle located within the interior 104 of the build chamber 102 that is arranged to receive the raw material 141 from the one or more raw material hoppers 140a, 140b. The powder bed 110 is not limited in size or configuration by the present disclosure, but may generally be shaped and sized to hold an amount of the raw material 141 from the raw material hoppers 140a, 140b in the form of the powder layer 112, one or more portions of article 142, and/or unfused raw material 141, as described in greater detail herein.

In some examples, the powder bed 110 may include a movable build platform 111 supported by a lifting component 113. The movable build platform 111 may generally be a surface within the powder bed 110 that is movable by the lifting component 113 in a system vertical direction (e.g., in the +y/-y directions of the coordinate axes of FIG. 1) to increase and/or decrease a total volume of the powder bed 110. For example, the movable build platform 111 within the powder bed 110 may be movable by the lifting component 113 in a downward direction (e.g., toward the -y direction of the coordinate axes of FIG. 1) so as to increase the volume of the powder bed 110. In addition, the movable build platform 111 may be movable by the lifting component 113 to add each successive powder layer 112 to the article 142 being formed, as described in greater detail herein.

The lifting component 113 is not limited by the present disclosure, and may generally be any device or system capable of being coupled to the movable build platform 111 and movable to raise or lower the movable build platform 111 in the system vertical direction (e.g., in the +y/y directions of the coordinate axes of FIG. 1). In some examples, the lifting component 113 may utilize a linear actuator type mechanism to effect movement of the movable build platform 111. Illustrative examples of devices or systems suitable for use as the lifting component 113 include, but are not limited to, a scissor lift, a mechanical linear actuator such as a screw based actuator, a wheel and axle actuator (e.g., a rack and pinion type actuator), a hydraulic actuator, a pneumatic actuator, a piezoelectric actuator, an electromechanical actuator, and/or the like. In some examples, the lifting component 113 may be located within the build chamber 102. In other examples, the lifting component 113 may be only partially located within the build chamber 102, particularly in examples in which it may be desirable to isolate portions of the lifting component 113 that are sensitive to the harsh conditions (high heat, excessive dust, etc.) within the interior 104 of the build chamber 102.

The powder distributor 108 is generally arranged and configured to lay down and/or spread a layer of the raw material 141 as the powder layer 112 in the powder bed 110 (e.g., on start plate or build platform 111 within the powder bed). That is, the powder distributor 108 is arranged such that movement of the powder distributor 108 is in a horizontal plane defined by the x-axis and the z-axis of the coordinate axes depicted in FIG. 1. For example, the powder distributor 108 may be an arm, rod, or the like that extends a distance in the z direction of the coordinate axes of FIG. 1 over or above the powder bed 110 (e.g., from a first end to a second end of the powder bed 110). In some examples, the length of the powder distributor 108 may be longer than a width of the build platform 111 such that the powder layer 112 can be distributed on each position of the build platform 111. In some examples, the powder distributor 108 may have a central axis in parallel with a top surface of the build platform 111 (e.g., generally parallel to the +x/-x axis of the coordinate axes of FIG. 1). One or more motors, actuators, and/or the like may be coupled to the powder distributor 108 to effect movement of the powder distributor 108. For example, a rack and pinion actuator may be coupled to the powder distributor 108 to cause the powder distributor 108 to move back and forth over the powder bed in the +x/-x directions of the coordinate axes of FIG. 1, as indicated by the double sided arrow depicted above the powder distributor 108 in FIG. 1. In some examples, movement of the powder distributor 108 may be continuous (e.g., moving without stopping, other than to change direction). In other examples, movement of the powder distributor 108 may be stepwise (e.g., moving in a series of intervals). In yet other examples, movement of the powder distributor 108 may be such that a plurality of interruptions occur between periods of movement.

As described in greater detail herein, the powder distributor may further include one or more teeth (e.g., rake fingers or the like) that extend from the powder distributor 108 into the raw material 141 from the raw material hoppers 140a, 140b to cause disruption of the raw material 141 when the powder distributor 108 moves (e.g., to distribute the raw material 141, to spread the powder layer 112, etc.).

In some examples, the powder distributor 108 includes a plurality of rake teeth 107 extending from a bottom surface B of the powder distributor 108 (e.g., extending generally towards the -y direction of the coordinate axes of FIG. 1). In some examples, the rake teeth 107 may extend in a direction that is substantially perpendicular to a plane of the build platform 111 (e.g., perpendicular to the plane formed by the x-axis and z-axis of the coordinate axes depicted in FIG. 1). In another example, the rake teeth 107 may be slanted with respect to the build platform 111. An angle a of the slanted rake teeth 107 with respect to a normal to the build platform may be any value, and, in some examples, is between about 0 and about 45°.

In some examples, each one of the plurality of rake teeth 107 may be a metal foil or a metal sheet. The total length of the plurality of rake teeth 107 may be longer than a width of the build platform 111 in order to make it possible to distribute powder on each position of the build platform 111. The rake teeth 107 may be shaped and sized to rake through the raw material 141 to distribute the powder layer 112 on the build platform 111. Some examples may not include rake teeth 107.

It should be understood that while the powder distributor 108 described herein generally extends a distance in the x direction of the coordinate axes depicted in FIG. 1 and moves in the +x/-x directions of the coordinate axes depicted in FIG. 1 to spread the powder layer 112 as described above, this is merely one illustrative example. Other configurations are also contemplated. For example, the powder distributor 108 may rotate about an axis to spread the powder layer 112, may articulate about one or more joints or the like to spread the powder layer 112, and/or the like without departing from the scope of the present disclosure.

In some examples, a cross section of the powder distributor 108 may be generally triangular, as depicted in FIG. 1. However, it should be understood that the cross section may be any shape, including but not limited to, circular, elliptical, quadratic, rectangular, polygonal or the like. A height of the powder distributor 108 may be set in order to give the powder distributor 108 a particular mechanical strength in the system vertical direction (e.g., along the +y/-y axis of the coordinate axes of FIG. 1). That is, in some examples, the powder distributor 108 may have a particular controllable flex in the system vertical direction. The height of the powder distributor may also be selected considering that the powder distributor 108 pushes an amount of the raw material 141. If the height of the powder distributor 108 is too small, the powder distributor 108 can only push forward a smaller amount relative to a higher power powder distributor 108. However, if the height of the powder distributor 108 is too high, the powder distributor 108 may complicate the powder catching from a scree of powder, (e.g., the higher the height of the powder distributor 108, the more force may be required in order to catch a predetermined amount of powder from the scree of powder by moving the powder distributor 108 into the scree of powder and letting a predetermined amount of powder fall over the top of the powder distributor 108 from a first side in the direction of travel into the scree of powder to a second side in the direction of the build platform 111). In still yet other examples, the height of the powder distributor 108 may be such that areas adjacent to both a leading edge and a trailing edge of the powder distributor 108 are within a field of view 116 of the imaging device 114, as described herein.

In some examples, the powder distributor 108 may be communicatively coupled to the control component 120, as depicted by the dashed line in FIG. 1 between the powder distributor 108 and the control component 120. As used herein, the term "communicatively coupled" generally refers to any link in a manner that facilitates communications. As such, "communicatively coupled" includes both wireless and wired communications, including those wireless and wired communications now known or later developed. As the powder distributor 108 is communicatively coupled to the control component 120, the control component 120 may transmit one or more signals, data, and/or the like to cause the powder distributor 108 to move, change direction, change speed, and/or the like. For example, a "reverse direction" signal transmitted by the control component 120 to the powder distributor 108 may cause the powder distributor 108 to reverse the direction in which it is moving (e.g., reverse movement in the +x direction to movement in the -x direction).

Each of the raw material hoppers 140a, 140b may generally be containers that hold an amount of the raw material 141 therein and contain an opening to dispense the raw material 141 therefrom. While FIG. 1 depicts two raw material hoppers 140a, 140b, the present disclosure is not limited to such. That is, any number of raw material hoppers may be utilized without departing from the scope of the present disclosure. Further, while FIG. 1 depicts the raw material hoppers 140a, 140b as being located within the interior 104 of the build chamber 102, the present disclosure is not limited to such. That is, the raw material hoppers 140a, 140b may be located outside or partially outside the build chamber 102 in various other examples. However, it should be understood that if a raw material hopper is located outside or partially outside the build chamber 102, one or more outlets of the raw material hoppers that supply the raw material 141 may be selectively sealed when not distributing the raw material 141 in order to maintain the vacuum within the build chamber 102.

The shape and size of the raw material hoppers 140a, 140b are not limited by the present disclosure. That is, the raw material hoppers 140a, 140b may generally have any shape and or size without departing from the scope of the present disclosure. In some examples, each of the raw material hoppers 140a, 140b may be shaped and or sized to conform to the dimensions of the build chamber 102 such that the raw material hoppers 140a, 140b can fit inside the build chamber. In some examples, the raw material hoppers 140a, 140b may be shaped and sized such that a collective volume of the raw material hoppers 140a, 140b is sufficient to hold an amount of raw material 141 that is necessary to fabricate the article 142, which includes a sufficient amount of material to form each successive powder layer 112 and additional material that makes up the unfused raw material 141.

The raw material hoppers 140a, 140b may generally have an outlet for ejecting the raw material 141 located within the raw material hoppers 140a, 140b such that the raw material 141 can be spread by the powder distributor 108, as described herein. In some examples, such as the example depicted in FIG. 1, the raw material 141 may freely flow out of the raw material hoppers 140a, 140b under the force of gravity, thereby forming piles or scree of raw material 141 for the powder distributor 108 to spread. In other examples, the outlets of the raw material hoppers 140a, 140b may be selectively closed via a selective closing mechanism so as to only distribute a portion of the raw material 141 located within the respective raw material hoppers 140a, 140b at a particular time. The selective closing mechanisms may be communicatively coupled to the control component 120 such that data and/or signals transmitted to/from the control component 120 can be used to selectively open and close the outlets of the raw material hoppers 140a, 140b.

The raw material 141 contained within the raw material hoppers 140a, 140b and used to form the article 142 is not limited by the present disclosure, and may generally be any raw material used for EBM or DMI,M now known or later developed. Illustrative examples of raw material 141 includes, but is not limited to, pure metals such as titanium, aluminum, tungsten, or the like; and metal alloys such as titanium alloys, aluminum alloys, stainless steel, cobalt-chrome alloys, cobalt-chrome-tungsten alloys, nickel alloys, and/or the like. Specific examples of raw material 141 include, but are not limited to, Ti6Al4V titanium alloy, Ti6Al4V ELI titanium alloy, Grade 2 titanium, and ASTM F75 cobalt-chrome (all available from Arcam AB, Mölndal, Sweden). Another specific example of raw material 141 is INCONEL^{®} alloy 718 available from Special Metals Corporation (Huntington WV).

In certain examples, the raw material 141 is pre-alloyed, as opposed to a mixture. This may allow classification of EBM or DMI,M with selective laser melting (SLM), where other technologies like selective laser sintering (SLS) and direct metal laser sintering (DMI,S) require thermal treatment after fabrication. Compared to selective laser melting (SLM) and DMLS, EBM has a generally superior build rate because of its higher energy density and scanning method.

The emitter 130 is generally a device that emits an electron beam (e.g., a charged particle beam), such as, for example, an electron gun, a linear accelerator, or the like. The emitter 130 generates an energy beam 131 that may be used for melting or fusing together the raw material 141 when spread as the powder layer 112 on the build platform 111. In some examples, the emitter 130 may include at least one focusing coil, at least one deflection coil and an electron beam power supply, which may be electrically connected to an emitter control unit. In one illustrative example, the emitter 130 generates a focusable electron beam with an accelerating voltage of about 60 kilovolts (kV) and with a beam power in the range of about 0 kilowatts (kW) to about 10 kW. The pressure in the vacuum chamber may be in the range of about 1×10⁻³ mBar to about 1×10⁻⁶ mBar when building the article 142 by fusing each successive powder layer 112 with the energy beam 131. The emitter 130 may sit in a gun vacuum chamber. The pressure in the gun vacuum chamber may be in the range of about 1×10⁻⁴ mBar to about 1×10⁻⁷ mBar. In some examples, the emitter 130 may emit a laser beam using direct metal laser melting (DMLM). The emitter 130 may emit laser to melt ultra-thin layers of metal powder to build a three-dimensional object. When using DMLM, a gas flow may be provided over a build in contrast with electron beam melting manufacturing that requires a vacuum chamber.

In some examples, the emitter 130 may be communicatively coupled to the control component 120, as indicated in FIG. 1 by the dashed line between the emitter 130 and the control component 120. The communicative coupling of the emitter 130 to the control component 120 may provide an ability for signals and/or data to be transmitted between the emitter 130 and the control component 120, such as control signals from the control component 120 that direct operation of the emitter 130.

Still referring to FIG. 1, the imaging device 114 is generally located in the exterior environment 105 outside the build chamber 102, yet positioned such that the field of view 116 of the imaging device 114 is through the window 106 of the build chamber 102. The imaging device 114 is generally positioned outside the build chamber 102 such that the harsh environment within the interior 104 of the build chamber 102 does not affect operation of the imaging device 114. That is, the heat, dust, metallization, x-ray radiation, and/or the like that occurs within the interior 104 of the build chamber 102 will not affect operation of the imaging device 114. In some examples, the imaging device 114 is fixed in position such that the field of view 116 remains constant (e.g., does not change). Moreover, the imaging device 114 is arranged in the fixed position such that the field of view 116 of the imaging device 114 encompasses an entirety of the powder bed 110. That is, the imaging device 114 is capable of imaging the entire powder bed 110 within the build chamber 102 through the window 106.

In some examples, the imaging device 114 is a device particularly configured to sense electromagnetic radiation, particularly heat radiation (e.g., thermal radiation) that is generated by the various components within the powder bed 110 (e.g., the powder layer 112, the raw material 141, and/or the article 142). Thus, the imaging device 114 may generally be a device particularly tuned or otherwise configured to obtain images in spectra where heat radiation is readily detected, such as the visible spectrum and the infrared spectrum (including the far infrared and the near infrared spectrum). As such, one illustrative example of a device particularly tuned or otherwise configured to obtain images in spectra where heat radiation includes, but is not limited to, an infrared camera. In some examples, the imaging device 114 may be a camera that is sensitive within a range of wavelengths of about 1 micrometer(µm) to about 14 µm, including about 1 µm, about 2 µm, about 3 µm, about 4 µm, about 5 µm, about 6 µm, about 7 µm, about 8 µm, about 9 µm, about 10 µm, about 11 µm, about 12 µm, about 13 µm, about 14 µm, or any value or range between any two of these values (including endpoints). As such, the imaging device 114 is suitable for imaging temperatures which occur during EBM or DMLM of the powder layer 112. In some examples, the wavelength sensitivity of the imaging device 114 may be selected in accordance with the type of raw material used. Illustrative examples of suitable devices that may be used for the imaging device 114 include, but are not limited to, an IR-camera (Infrared-camera), NIR-camera (Near Infrared-camera), a VISNIR-camera (Visual Near Infrared-camera), a CCD camera (Charged Coupled Device-camera), a line-scan camera, and a CMOS-camera (Complementary Metal Oxide Semiconductor-camera).

In some examples, the imaging device 114 may be an area scan camera that is capable of providing data specific to one or more regions of interest within the field of view 116, including regions of interest that move within the field of view 116. That is, an area scan camera includes a matrix of pixels that allows the device to capture a 2D image in a single exposure cycle with both vertical and horizontal elements. Area scan cameras can further be used to obtain a plurality of successive images, which is useful when selecting regions of interest within the field of view 116 and observing a change in the regions of interest, as described in greater detail herein. Illustrative examples of such area scan cameras include those available from Basler AG (Ahrensburg, Germany), JAI Ltd. (Yokohama, Japan), National Instruments (Austin, TX), and Stemmer Imaging (Puchheim, Germany). In some examples, the imaging device 114 may be a line scan camera that can be used for jet pattern detection and/or power deposition anomaly detection for short feed, clumping, pushing, etc.

In some examples, the imaging device 114 may have a monochrome image sensor. In other examples, the imaging device 114 may have a color image sensor. In various examples, the imaging device 114 may include one or more optical elements, such as lenses, filters, and/or the like. In a particular example, the imaging device 114 may include a Bayer filter. As is generally understood, a Bayer filter is a color filter array (CFA) for arranging RGB color filters on a square grid of photosensors to create a color image, such as a filter pattern of about 50% green, about 25% red, and about 25% blue.

In some examples, the imaging device 114 may further be a device particularly configured to provide signals and/or data corresponding to the sensed electromagnetic radiation to the control component 120. As such, the imaging device 114 may be communicatively coupled to the control component 120, as indicated by the dashed lines depicted in FIG. 1 between the imaging device 114 and the control component 120.

It should be understood that, by locating the imaging device 114 in the exterior environment 105 outside the interior 104 of the build chamber 102, it is possible to easily retrofit existing build chambers having windows in the chamber walls 103 therein with a kit that includes the imaging device 114 so as to upgrade the existing build chambers with the capabilities described herein.

The control component 120 (also referred to as the additive machine controller) is generally a device that is communicatively coupled to one or more components of the additive manufacturing system 100 (e.g., the powder distributor 108, the imaging device 114, and/or the emitter 130) and is particularly arranged and configured to transmit and/or receive signals and/or data to/from the one or more components of the additive manufacturing system 100, such as the imaging device 114, one or more sensors 150-151 (residual oxygen percentage sensor, laser rail temperature sensor, dew point temperature sensor, heating temperature sensor, differential pressure sensor, etc.) positioned with respect to (e.g., on or within components of) the additive manufacturing system 100 to record temperature, motion, vibration, power, etc.

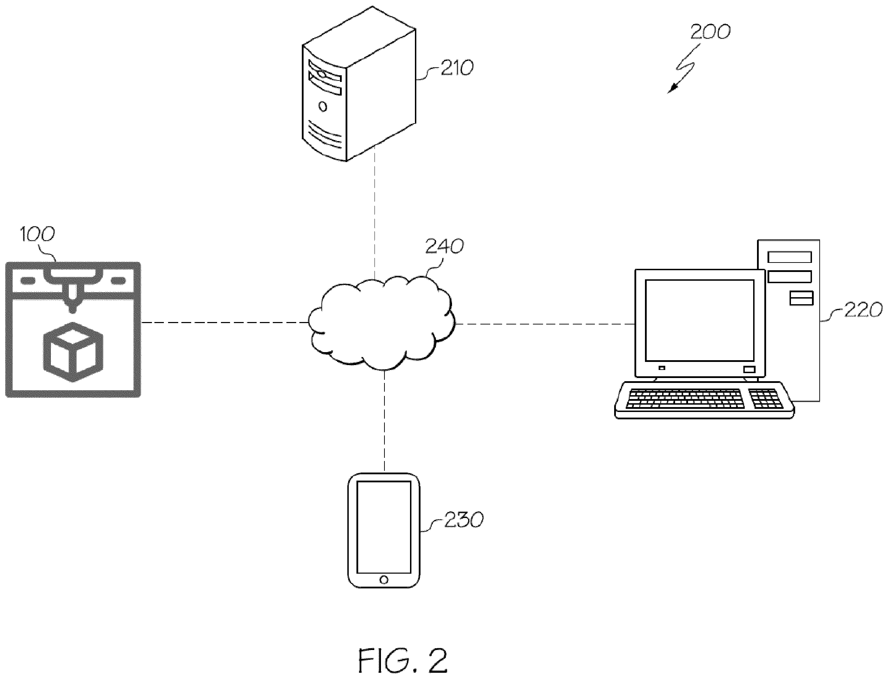

FIG. 2 is a block diagram of an example architecture 200 according to one or more examples shown and described herein. In certain examples, the architecture or infrastructure 200 can include the additive manufacturing machine 100, a server 210, a user computing device 220, and a mobile computing device 230. One or more of the server 210, the user computing device 220, or the mobile computing device 230 can implement the additive machine controller 120, for example. The additive manufacturing machine 100 (also referred to herein as an additive machine, additive manufacturing system, additive manufacturing device, and/or additive manufacturing apparatus) can be communicatively coupled to the server 210, the user computing device 220, and the mobile computing device 230 by a network 240. In certain examples, the network 240 can include one or more computer networks (e.g., a personal area network, a local area network, or a wide area network), cellular networks, satellite networks and/or a global positioning system and combinations thereof. Accordingly, the user computing device 220 can be communicatively coupled to the network 240 via a wide area network, via a local area network, via a personal area network, via a cellular network, via a satellite network, etc. Suitable local area networks can include wired Ethernet and/or wireless technologies such as, for example, wireless fidelity (Wi-Fi). Suitable personal area networks can include wireless technologies such as, for example, IrDA, Bluetooth^{®}, Wireless USB, Z-Wave, ZigBee, and/or other near field communication protocols. Suitable cellular networks include, but are not limited to, technologies such as LTE, WiMAX, UMTS, CDMA, and GSM.

In certain examples, the additive manufacturing system 100 can transmit captured information such as images, sensor signals (e.g., open platform connections unified architecture (OPC UA) signals, etc.), build states, log files, etc., related to builds to the server 210, the user computing device 220, and/or the mobile computing device 230. The log files can include a plurality of parameters that are output from a plurality of subsystems of the additive manufacturing system 100 such as a vacuum system, a beam system, a powder layering system, and the like. The plurality of parameters may be raw data output from the additive manufacturing system 100, or parameters further processed based on machine operations. For example, parameters can be processed based on domain knowledge and/or one or models, such as physics-based, statistical, and/or mathematical models, to generate new features and/or parameters. The combination and analysis of multiple machine functions and metadata can identify, for example, parameter issues affecting a machine, process, build, etc. For example, smoke and/or soot deposition can be detected, which indicates an inadequate gas flow, incorrect speed/beam/power parameter(s) (e.g., set too high, etc.), etc. Machine health and process data can together indicate an effect on build and part quality. The image data and/or log files can be stored in the server 210, the user computing device 220, and/or the mobile computing device 230.

The server 210 generally includes processors, memory, and chipsets for delivering resources via the network 240. Resources can include providing, for example, processing, storage, software, and information from the server 210 to the user computing device 220 via the network 240. The server 210 can store and/or dynamically compute machine learning models or statistical models on parameters/features from the additive manufacturing system 100. The user computing device 220 generally includes processors, memory, and chipsets for communicating data via the network 240.

Referring to FIG. 2, the mobile computing device 230 can be any device having hardware (e.g., chipsets, processors, memory, etc.) for communicatively coupling with the network 240. Specifically, the mobile computing device 230 can include an antenna for communicating over one or more of the wireless computer networks described above. Moreover, the mobile computing device 230 can include a mobile antenna for communicating with the network 240. Accordingly, the mobile antenna may be configured to send and receive data according to a mobile telecommunication standard of any generation (e.g., 1G, 2G, 3G, 4G, 5G, etc.). Specific examples of the mobile computing device 230 include, but are not limited to, smart phones, tablet devices, e-readers, laptop computers, or the like. The mobile computing device 230 can have a display similar to the display device 408 of the user computing device 220 and display user interfaces.

Referring to FIG. 2, the network 240 generally includes a plurality of base stations that are configured to receive and transmit data according to mobile telecommunication standards. The base stations are further configured to receive and transmit data over wired systems such as public switched telephone network (PSTN) and backhaul networks. The network 240 can further include any network accessible via the backhaul networks such as, for example, wide area networks, metropolitan area networks, the Internet, satellite networks, or the like. Thus, the base stations generally include one or more antennas, transceivers, and processors that execute machine readable instructions to exchange data over various wired and/or wireless networks.

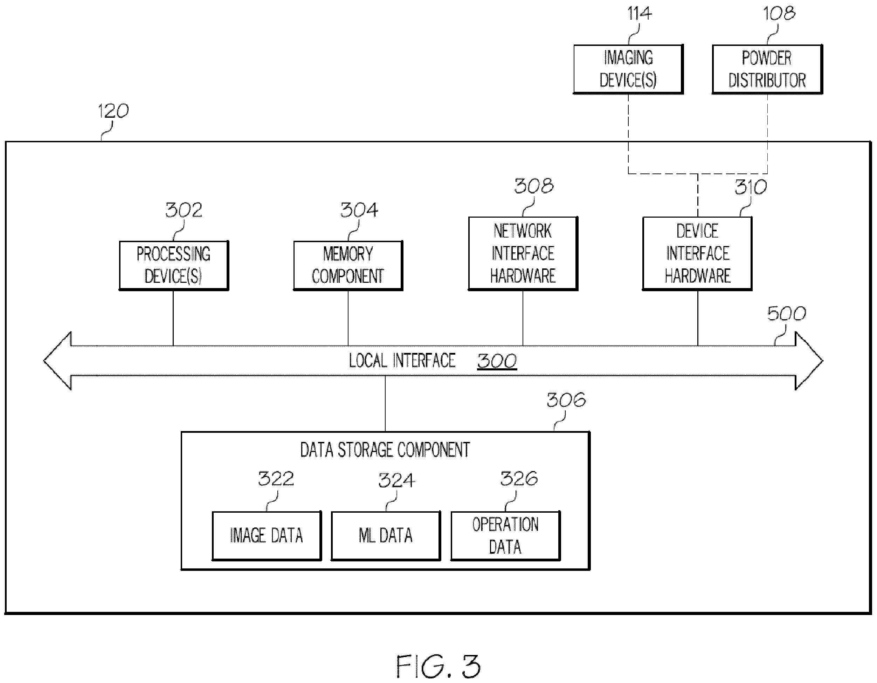

Turning to FIG. 3, the various internal components of the control component, also referred to herein as an additive machine controller, 120 depicted in FIG. 1 are shown. Particularly, FIG. 3 depicts various system components for collecting parameters and images for operating the additive manufacturing system 100, analyzing parameters and image data and/or assisting with the control of various components of the additive manufacturing system 100 depicted in FIG. 1.

As illustrated in FIG. 3, the additive machine controller 120 can include one or more processing devices 302, a non-transitory memory component 304, network interface hardware 308, device interface hardware 310, and a data storage component 306, all of which are interconnected by a local interface 300, such as a bus or the like.

The one or more processing devices 302, such as a computer processing unit (CPU), may be the central processing unit of the additive machine controller 120, performing calculations and logic operations to execute a program. The one or more processing devices 302, alone or in conjunction with the other components, are illustrative processing devices, computing devices, processors, or combinations thereof. The one or more processing devices 302 can include any processing component configured to receive and execute instructions (such as from the data storage component 306 and/or the memory component 304).

The memory component 304 can be configured as a volatile and/or a nonvolatile computer-readable medium and, as such, can include random access memory (including SRAM, DRAM, and/or other types of random access memory), read only memory (ROM), flash memory, registers, compact discs (CD), digital versatile discs (DVD), and/or other types of storage components. The memory component 304 can include one or more programming instructions thereon that, when executed by the one or more processing devices 302, cause the one or more processing devices 302 to complete various processes.

Still referring to FIG. 3, the programming instructions stored on the memory component 304 can be embodied as a plurality of software logic modules, where each logic module provides programming instructions for completing one or more tasks.

Still referring to FIG. 3, the network interface hardware 308 can include any wired or wireless networking hardware, such as a modem, LAN port, wireless fidelity (Wi-Fi) card, WiMax card, mobile communications hardware, and/or other hardware for communicating with other networks and/or devices. For example, the network interface hardware 308 can be used to facilitate communication between the additive manufacturing system 100 and external devices such as the server 210, the user computing device 220, the mobile computing device 230 and the like via a network 240 as shown in FIG. 2.

Referring to FIG. 3, the device interface hardware 310 can communicate information between the local interface 300 and one or more components of the additive manufacturing system 100 of FIG. 1. For example, the device interface hardware 310 can act as an interface between the local interface 300 and the imaging device 114 of FIG. 1, the powder distributor 108, and/or the like. In some examples, the device interface hardware 310 can transmit or receive signals and/or data to/from the imaging device 114 of FIG. 1 and/or other sensors.

Still referring to FIG. 3, the data storage component 306, which may generally be a storage medium, can contain one or more data repositories for storing data that is received and/or generated. The data storage component 306 can be any physical storage medium, including, but not limited to, a hard disk drive (HDD), memory, removable storage, and/or the like. While the data storage component 306 is depicted as a local device, it should be understood that the data storage component 306 can be a remote storage device, such as a server computing device, cloud based storage device, or the like. Illustrative data that can be contained within the data storage component 306 includes, but is not limited to, image data 322, machine learning (ML) data 324, and/or operation data 326. The image data 322 can generally be data that is used by the control component 120 to recognize particular objects, determine one or more points on the powder layer 112 (FIG. 1), monitor an amount of electromagnetic radiation at the one or more points, determine a change in electromagnetic radiation, and/or the like. For example, the additive machine controller 120 can access the image data 322 to obtain a plurality of images received from the imaging device 114, determine an amount of electromagnetic radiation from the image data 322, and generate one or more commands accordingly.

Still referring to FIG. 3, the ML data 324 can be data that is generated as a result of one or more machine learning processes or statistical modelling processes used to determine features of the powder layer 112 (FIG. 1) from the image data 322. Still referring to FIG. 3, the operation data 326 can include parameters output from a plurality of subsystems from the additive manufacturing system 100. For example, the operation data 326 can include parameters output from a vacuum system, an inertization system, a beam system, a powder layering system, and the like. Specifically, parameters for the beam system can include, but are not limited to, a maximum power supply voltage, a minimum power supply voltage, a filament burn time, an average preheat grid voltage, a grid voltage drop after arctrip, an average cathode power, an average effective work function, an average smoke count, a smoke warning, an average column pressure, a number of arc trips, a maximum deviation in grid voltage, a grid voltage at 2mA, and the like. Parameters for the vacuum system can include, but are not limited to, a maximum chamber pressure, a minimum chamber pressure, a maximum column pressure, a minimum column pressure, a vacuum failure error, an average variation in chamber vacuum, a minimum helium supply line pressure, an average current in chamber turbo pump, an average current in column turbo pump, a turbo pump idle duration, an average internal circuit temperature, an average incoming cooling water temperature, and the like.

It should be understood that the components illustrated in FIG. 3 are merely illustrative and are not intended to limit the scope of this disclosure. More specifically, while the components in FIG. 3 are illustrated as residing within the additive machine controller 120, this is a non-limiting example. In some examples, one or more of the components can reside external to the additive machine controller 120.

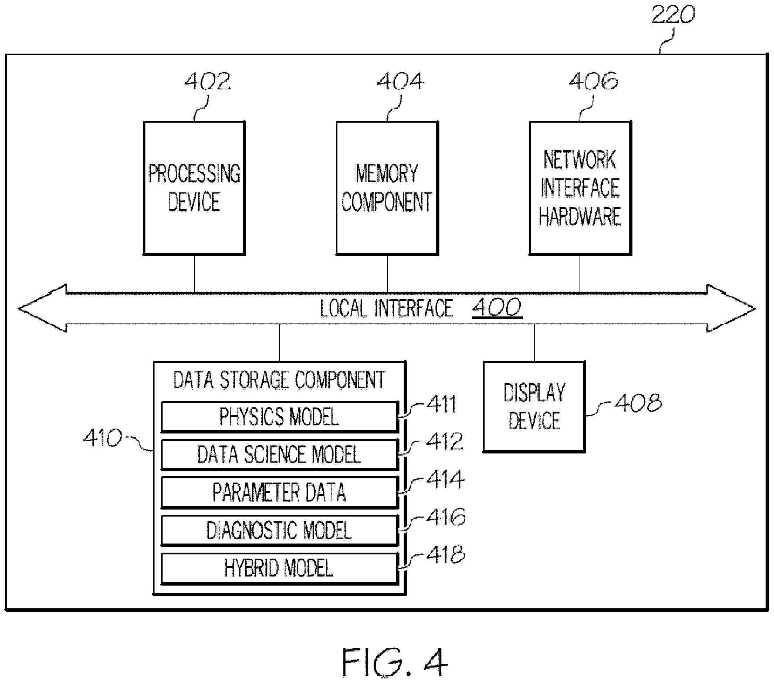

FIG. 4 depicts the various internal components of the user computing device 220 depicted in FIG. 2. As illustrated in FIG. 4, the user computing device 220 can include one or more processing devices 402, a non-transitory memory component 404, network interface hardware 406, a display device 408, and a data storage component 410, all of which are interconnected by a local interface 400, such as a bus or the like. While FIG. 4 depicts the components of the user computing device 220, the server 210 in FIG. 2 can have the same or similar components as illustrated in FIG. 4.

The one or more processing devices 402, such as a computer processing unit (CPU), can be the central processing unit of the user computing device 220, performing calculations and logic operations to execute a program. The one or more processing devices 402, alone or in conjunction with the other components, are illustrative processing devices, computing devices, processors, or combinations thereof. The one or more processing devices 402 can include any processing component configured to receive and execute instructions (such as from the data storage component 410 and/or the memory component 404).

The memory component 404 can be configured as a volatile and/or a nonvolatile computer-readable medium and, as such, can include random access memory (including SRAM, DRAM, and/or other types of random access memory), read only memory (ROM), flash memory, registers, compact discs (CD), digital versatile discs (DVD), and/or other types of storage components. The memory component 404 can include one or more programming instructions thereon that, when executed by the one or more processing devices 402, cause the one or more processing devices 402 to diagnose a component or a build of the additive manufacturing system.

Still referring to FIG. 4, the display device 408 can include any medium capable of transmitting an optical output such as a cathode ray tube, a light emitting diode (LED) display, an organic light emitting diode (OLED) display, a liquid crystal display, a plasma display, or the like. In some examples, the display device 408 can be a touchscreen that, in addition to visually displaying information, detects the presence and location of a tactile input upon a surface of or adjacent to the display device 408.

Still referring to FIG. 4, the data storage component 410, which can generally be a storage medium, can contain one or more data repositories for storing data that is received and/or generated. The data storage component 410 can be any physical storage medium, including, but not limited to, a hard disk drive (HDD), memory, removable storage, and/or the like. While the data storage component 410 is depicted as a local device, it should be understood that the data storage component 410 can be a remote storage device, such as a server computing device, cloud based storage device, or the like. As shown in the example of FIG. 4, the data storage component 410 can store one or more models and/or data, such as a physics model 411, a data science model 412, parameter data 414, a diagnostic model 416, a hybrid model 418, etc.

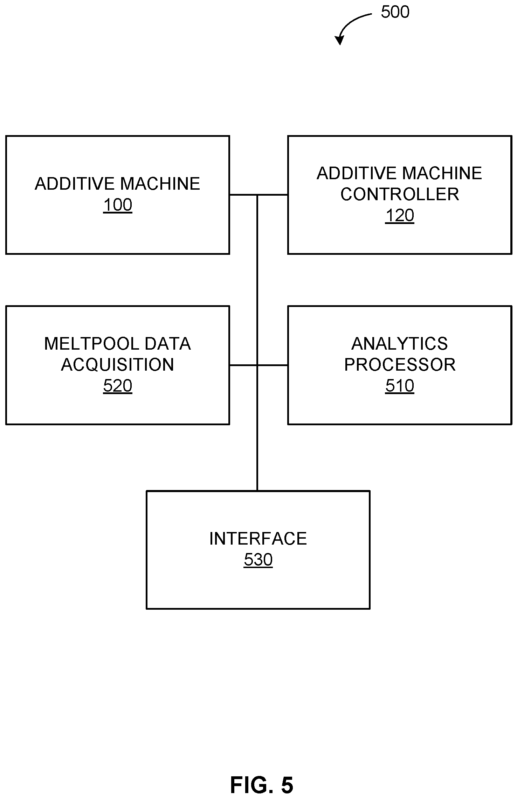

FIG. 5 illustrates an example infrastructure or framework 500 to monitor and adjust additive manufacturing based on machine health monitoring and analysis. In the example framework 500 of FIG. 5, the additive manufacturing machine 100 and its controller 120 are in communication with an analytics processor 510 which leverages meltpool data acquisition 520 and information from the additive manufacturing machine 100 and/or its control computer 120 to model the additive machine 100 and its operation, assess a health of the additive manufacturing machine 100, score or otherwise evaluate build quality (e.g., layerwise in real time or near real time, etc.), and/or otherwise monitor, model, evaluate, and modify a configuration, performance, control, etc., of the additive manufacturing machine 100. While the analytics processor 510 is shown as a single device in the example of FIG. 5, the analytics processor 510 can be implemented as one or more FPGAs, processors, trusted platform modules (TPMs), and/or other computing devices, for example. When the analytics processor 510 is implemented using a plurality of devices, the FPGA(s) and processor(s) can coordinate with each other toward a common data fusion and/or analysis. The multiple devices can be synchronized to a same time base, build metadata, and/or machine control events, for example.

A plurality of process parameters affect the microstructure and mechanical properties of a 3D printed object using a powder bed fusion and/or other laser-based melting process, including scanning speed (e.g., in millimeters per second (mm/s), etc.), beam speed/speed function, beam current or beam power (e.g., in Watts (W), etc.), layer thickness (e.g., in mm, etc.), powder layer uniformity, and line offset. Such parameters can be adjusted and/or optimized to result in desired 3D printed object properties. For example, beam power, scan speed, spacing, layer thickness, etc., affect an energy density (e.g., average applied energy per volume of material, J/mm3). In some examples, the beam speed can be adjusted near an edge of the object to prevent overheating. Layer thickness (e.g., 50-150um) affects geometric accuracy of a fabricated object and can be varied depending on the type of 3D printer used, as well as other process parameters such as material powder particle size, etc. Additionally, a scanning pattern and scanning speed also affect the final 3D printed object microstructure and porosity. For example, a scanning pattern (e.g., cross-section of layer) represents the geometric track of the electron beam, laser beam, and/or other energy beam 131 used to melt the metal powder to form a cross-section on a powder bed/build area. Such geometries can include outer contours, inner contours, and/or a hatch pattern, for example.

Issues with other components aside from the energy beam 131 can also result in build defects and/or process imperfections. For example, obstacles or abruptions in powder fetching and spreading on the build plate or platform 111 can also cause imperfections in a resulting build part. Other components can also be analyzed and associated abnormalities or issues identified/predicted and addressed. For example, the laser/emitter 130 may have low power issues, material issues, etc. A scanner can experience issues with wear (e.g., detectable via a pattern), speed (e.g., detectable with respect to time), etc. Wear can also be evaluated with respect to movable components such as pump(s), motor build chamber motor powder chamber, motor recoater, build module, for example. One or more sensors (e.g., optic temperature sensor, oxygen sensor, pressure sensor, temperature sensor, dew point sensor, etc.) can be evaluated for accuracy, for example. Functionality and/or performance can be evaluated for one or more components such as a collimator, optics chiller, valve(s), seal(s), etc. Control board(s) can be evaluated with respect to runtime, mean-time-to-failure (MTTF), etc., for example.

Parameters/settings involved in other modalities can differ from those described above. For example, in a BinderJet system, both single layer statistical process control (SPC) and multi-layer SPC can be facilitated. Such SPC can include image-based defect detection including powder bed monitoring with a short spread and closed loop control to trigger another dose and recoat. SPC can also include image-based defect detection with powder bed monitoring wherein streaking/pushing of powder indicates recoater damage resulting in a recoat close loop control or stop build. Image-based defect detection can also include jetting health with pattern test image analysis (e.g., pre-print, jet onto paper a pattern, image and analyze, etc.) in a closed loop to re-clean the jet automatically with a solvent. In certain examples, jetting health can include a jetting onto powder analysis (e.g., image binder on powder, potentially with IR camera, and check binder deposition into powder, etc.) in a closed loop to re-clean the jet automatically with a solvent. Image-based defect detection can also include geometric conformance with analysis of jetting onto powder versus an expected geometry. Images can be used to compare an expected geometry to an actual geometry, for example. BinderJet analysis can also involve closed loop control of curing parameters, recoat parameters, jetting parameters, etc. Curing parameters (e.g., IR lamp intensity, etc.) can be modified based on real-time (or substantially real-time) health (e.g., based on powder bed temperature, images, etc.). Recoat parameters (e.g., dosing factor, roller speed, etc.) can be modified based on real-time (or substantially real-time) health (e.g., based on powder bed temperature from IR camera, images, etc.). Jetting parameters (e.g., measure/modify saturation, manifold pressures, drop velocity, etc.) can be modified based on real-time health metrics (jetting quality, saturation, etc.) to enable detection, correction, and preventative measures. Other parameters, such as humidity, temperature, pressure, drive/pump current, and torque can all affect binding speed, quality, saturation of binder into the powder bed, and overall part quality. IR lamps that cure each layer of a build can be monitored in conjunction with these parameters (e.g., higher humidity can affect cure time and saturation). Lower IR temperature resulting from lamp degradation can affect print time and overall quality, etc.

In certain examples, one sensor can provide information about one parameter for one subsystem. In other examples, a plurality of sensors can be assigned to the subsystem such that different types of sensors provide different types of data with respect to one or more parameters for the subsystem. Using multiple sensors, more correlation can be established between parameters for the subsystem to drive improved error prediction, detection, and correction, for example.

Certain examples provide multimodal data fusion for near real-time detection, diagnosis and prediction of additive machine, process health, and build quality. The layerwise printing process of additive manufacturing technology allows for data capture of the printing process from the first layer to the last layer of a printed part. This data can include but is not limited to part design, material parameter definition, machine settings and configurations, as well as sensor and programmable logic controller (PLC) data, logging information, software errors/warnings, and other build information such as recoat imaging and print video.

Within a given build, for example, intelligent data weighting can be used to identify an anomaly across one or more layers. A decay strategy can also be employed across one more layers because a single layer anomaly can become a multi-layer concern sometimes. However, other times, a problem in one layer can be naturally cured by thermal effects from surrounding layers, etc. Weighting factors and employing decay can be helpful in identifying anomalies and evaluating whether the anomaly is likely to spread to other layers or be corrected by other layers, for example.

Certain examples provide a foundational data architecture to facilitate data fusion and establish a complete digital genealogy for each 3D print. With this foundation, statistical process control methods can be utilized to monitor machine, process, and part health in situ throughout the build process on a layer-wise basis to detect anomalies, defects, and enable closed loop control and correction, for example. In certain examples, a same machine and/or multiple machines can experience variability across multiple builds. One or more additive manufacturing machines repeating builds for the same part can leverage such foundational data to compare/contrast build health including statistical processor control analysis of subsystem components and process variables/configuration, for example.

Certain examples enable real-time monitoring of an additive build process, machine quality, and build quality. During a build, as a layer is created, health and performance analysis is performed to determine if there are any critical issues so that an operator can take timely action. Health and performance analysis can relate to build and/or print health, machine performance and/or part quality, etc. Multi-modal data (e.g., time series data from installed sensors, simulation/compensation modeling results, build inputs, settings, images from optical and/or infrared cameras related to powderbed, meltpool, etc.) is fed to a hybrid model that includes a series of analytical modules (e.g., data science, statistics, and additive domain-based physics). The hybrid model filters and/or otherwise pre-processes the data for feature extraction, signal-to-noise ratio (SNR) enhancements, etc., and then feeds the processed data to analytics models that compute physics-based metrics, which are further analyzed using data-science models based on one of more methods such as, statistical process control (SPC), statistics, Bayesian, machine learning, etc., to determine an overall quality of the process and a health of the additive manufacturing machine. The health metrics and model results are further combined using probabilistic models to determine an overall severity (e.g., health) score for the layer as well as individual quality scores for each `critical x' associated with each modality. Single-layer scoring, multi-layer scoring, etc., can be determined and used to detect, correct, and prevent issues with a build, process, and/or device. Modalities can include but are not limited to DMLM, EBM, DCAT, and BinderJet, for example.

The analysis enables health detection and diagnosis of the build process, additive manufacturing machine, and build quality at an individual layer level and over multiple layers using multi-layer analytics, trend analysis, change point detection, cumulative damage assessment etc. While a build is progressing, cumulative damage assessment is performed based on performance of previous layers leading to improved confidence of health and/or anomaly detection and correction as the build progresses as well as an overall health diagnosis of an entire build at the end of the build. In certain examples, forecasting and/or other prediction can be provided based on prior build data, trend analysis, etc., to identify issues before the issues occur and/or before the issues become a problem affecting the build of a part or machine performance.

These analytics are performed on a separate, secure computing device isolated from control operations to minimize risk to additive build machine performance. The authenticity and integrity of the analytics application code is securely protected with one or more integrated Trusted Platform Modules (e.g., implemented on one or more FPGAs, etc.), for example. As such, a root of trust is established between the analytics processor 510 and the additive manufacturing machine 100 (and, in some examples, the additive machine controller 120). Analytics results are displayed with live update on a web-based human machine interface (HMI). The HMI can be accessed by the printer's control computer and/or remotely via network connection, for example.

As illustrated in the example of FIG. 5, the analytics processor 510 provides in-situ monitoring of the additive manufacturing machine 100 during a build of a part or set of parts. The example analytics processor 510 can apply analytics to its real-time (or substantially real-time given transmission and/or processing latency, etc.) monitoring to determine additive machine 100 health. Rather than extracting data from the machine 100 at the end of a build, the analytics processor 510 receives and processes data during a build and provides automated quality scoring of the machine, process, and/or build data. The analytics processor 510 can facilitate layerwise process monitoring of machine health, build process health, and/or part quality, for example. Such monitoring can be facilitated by acquisition of real-time (or substantially real-time) data from one or more on-machine sensors, cameras, etc. Acquired information is analyzed using statistical and/or artificial intelligent (AI) models to determine a quality score of machine health, process health, and/or part quality, for example. Data is transferred from the additive machine 100, additive machine controller 120, etc., to the analytics processor 510. In certain examples, meltpool data from the additive machine 100 is gathered by the meltpool data acquisition circuitry 520 and provided to the analytics processor 510.

By providing the analytics processor 510 separate from the additive manufacturing machine 100 or the additive machine controller 120, the dedicated analytics processor 510 can perform high-compute processes without reducing efficiency or speed of the additive manufacturing machine 100 itself. The analytics processor 510 is isolated from the additive manufacturing machine 100, processing information from the additive machine 100 without interfering with operation of the additive machine 100 unless the processing reveals a problem and an adjustment to be made to the machine settings, process configuration, current and/or subsequent build, etc. The analytics processor 510 can examine specific processes of the additive manufacturing machine 100 (e.g., melting, recoating, etc.) as well as the overall health of the machine, process, build, etc., on a layer-by-layer basis. Certain examples provide a modular architecture that can be configured and extended to a plurality of product lines (e.g., M2, Mline, etc.), modalities (e.g., EBM, binder jet, etc.), and the like.

Physics and interplay of parameters is built into the analytics of the analytics processor 510. Analysis is enriched with knowledge of the additive manufacturing machine 100, sensor(s), and interplay between material parameters and machine operation, for example. Correlations and physical properties can be affected by input parameters of materials, additive manufacturing machine 100 configuration (e.g., gas flow, beam speed, and laser power, layer thickness of deposited powder, etc.), etc. Correlations can include correlation of log/time series, static images (e.g., thermal, still, infrared (IR), etc.), video, SPC and quality score metadata, and/or fusion thereof, for example.

FIG. 5 illustrates an example infrastructure or framework 500 to monitor and adjust additive manufacturing based on machine health monitoring and analysis. In the example framework 500 of FIG. 5, the additive manufacturing machine 100 and its controller 120 are in communication with an analytics processor 510 which leverages meltpool data acquisition 520 and information from the additive manufacturing machine 100 and/or its control computer 120 (e.g., from the camera or other imaging device 114, emitter 130, build plate/platform 111 and positioner and/or other lifting component 113, sensor(s) 150-151, etc.) to model the additive manufacturing machine 100 and its operation, assess a health of the additive manufacturing machine 100, score or otherwise evaluate build quality (e.g., layerwise in real time or near real time, etc.), and/or otherwise monitor, model, evaluate, and modify a configuration, performance, control, etc., of the additive manufacturing machine 100.

As such, the additive machine controller 120 can act on information provided by the analytics processor 510 to adjust or correct operation of the additive machine 100. As described further below, the analytics processor 510 performs layerwise analysis to detect and/or predict an error or other issue to drive a correction or modification to affect a current layer, future layer, future build, etc. Single and/or multi-layer analysis by the analytics processor 510 can correct, optimize, and/or otherwise improve future layers, for example.

For example, multi-layer laser health monitoring can be enabled by the analytics processor 510 implemented with a combination of FPGA data capture and analysis of laser power delivered versus expected or commanded laser power. Over time, laser power can degrade and/or laser calibration can fade and/or drift. The analytics processor 510, alone or in conjunction with one or more FPGAs, can monitor commanded power and position and detect/correct alignment issues, for example. Similarly, over multiple layers, health of a scanner galvanometer can also be observed including drift in accuracy over time related back to galvanometer temperature. The hotter the temperature, the greater probability that the scanner is experiencing wear, which affects accuracy, etc.

The analytics processor 510 provides an analysis of sub-systems of the additive machine 100 and its processes to generate build process optimization, inspection advice, and/or predictive machine maintenance, for example. The analytics processor 510 uses multi-sensor time series analysis, image analytics, correlation analysis, etc., across sensor, logfile, and other machine health and process data (images, meltpool emissivity, etc.). Near-real time analysis by the analytics processor 510 enables the additive manufacturing machine 100 and/or an associated user to make timely decisions, adjustments, etc., to affect machine/material as well as post-process work in progress (WIP) cost avoidance during a build (without having to wait or depend on post processing inspection), for example. The analytics processor 510 uses automatic data transfer and data analysis of each layer as the build is printed. The analytics processor 510 is a separate and secure analytics compute platform with a delay no longer than one layer behind the current layer being printed, for example, which does not interfere with the additive machine 100 but allows near-real time monitoring and adjustment of the additive manufacturing machine 100, for example. The analytics processor 510 can include physics-based models leveraging system expertise and additive physics to model the structure, configuration, and operation of the additive machine 100 and its associated process(es) and build(s), for example. Alternatively or additionally, the analytics processor 510 can include one or more data science models for diagnosis and/or prediction of machine, process, and/or build errors. In certain examples, the analytics processor 510 leverages one or more fusion models combining physics and data science to determine/predict an outcome. In certain examples, the analytics processor 510 is constructed with a modular architecture to help ensure faster adoption to new product lines and modalities (e.g., EBM, DMLM, BinderJet, DCAT, etc.) through easy reuse and 'swapping' of modality and/or product line software Docker containers (e.g., 20-30%) while retaining common analytic and software capabilities (e.g., 70%).

In certain examples, the analytics processor 510 provides statistical process control (SPC) using automatic SPC calculation of X "most important" variable for a given modality. Layer-by-layer analysis and visualization includes sub-systems, processes, and sub-processes of the additive manufacturing machine 100. Multi-layer analysis is used by the analytics processor 510 to form a cumulative damage assessment as the build progresses as well as an overall end-of-build health state. Alternatively or in addition to the multi-layer analysis, a multitude or variety of sensors can be analyzed with SPC to form a cumulative assessment. SPC can be used to calculate individual sensor values, which can then be combined across a layer for a layerwise score, for example. As such, one or more data sets per sensor and/or one or more sensors can be evaluated, combined, etc. The analytics processor 510 can employ an array of analytics that are activated based on modality (e.g., DMI,M, EBM, BinderJet, DCAT, etc.), objective (which component or process), etc., enabling machine and/pr modality agnosticism, for example.

In certain examples, hybrid models (e.g., hybrid AI models) provide a fusion of additive process physics, machine know-how, and data science (e.g., SPC/Statistics/Bayesian/Machine Learning) to process data from the additive machine 100 and/or meltpool analyzer 520. 'Default' and 'configurable' analytics modules work with the models and enable machine and/or modality agnosticism in the analytics processor 510. For example, a default module can include circuitry and instructions for computing and extracting of statistical features. An example of a configurable module (e.g., a physics-based module) is circuitry and instructions for computing 'filter clogging coefficient' (for DMLM), 'cathode health coefficient', `print head health' (for BinderJet), `light projector health' (for DCAT), etc. Configurable analytics can change sensitivity of detection, for example. For example, a "sensitivity slider" can set increased or decreased sensitivity for trial/benchmarks versus "production/qualified" builds. Configurable software modules allow configuration and selection of type of data, frequency of data, storage location, etc. (e.g., wherein data includes sensor data, log data, image data, build parameters, etc.). Within a build, layer-wise monitoring of machine and process health performance through sensors, meltpool data, powder bed information, etc., enables automated inspection and modification of machine, process, and/or build, for example. The analytics processor 510 provides a dedicated compute device to help ensure isolation of compute resources from control operations of the additive machine controller 120 and the additive machine 100. The analytic sensitivity and/or severity of reported alert can be made configurable based on defined regions of interest within the build. For example, the image based analytics are configured according to region definitions that can include but are not limited to part boundaries, layer ranges, bounded areas, or bounded volumes.

In certain examples, analytics code authenticity and integrity are protected with one or more integrated Trusted Platform Module (TPM). Use of the TPM(s) can provide a hardware root of trust for the analytics processor 510, the additive machine controller 120, etc. (e.g., establishing a trusted relationship). The TPM(s) can provide a tamper-proof grounding for detection and correction of errors, for example. The root of trust can include ensuring the authenticity of signed and/or otherwise certified analytics, for example. In certain examples, a combination of TPM and code-signing provides enhanced security with the root of trust to enable the analytics processor 510 to communicate with and affect the machine controller 120, the additive machine 100, etc. The TPM supports disk encryption and boot chain to protect the authenticity and integrity of code on the analytics processor 510, for example. Signed/certified packages can be sent from the analytics processor 510 to the additive machine controller 120 and/or directly to the additive manufacturing machine 100 for secure update.

Alternatively or additional to physics-based models, data science models, and/or hybrid models, data-driven analytics can be provided using a neural network (NN) or convolutional neural network (CNN) model, random forest, and other AI/machine learning (ML) approach involving big data, manual defect characterization, and model training. In certain examples, the machine learning models are trained in an offline system with access to large data sets, and then the trained models are deployed to the analytics processor 510. In certain examples, the trained models are aided by the use of compute accelerators such as GPUs, VPUs, and/or FPGAs. As such, models can be trained on prior build data (e.g., showing "good" builds, errors, corrections, etc.), "gold" reference build data, etc., across one or more systems/builds, etc.

Thus, certain examples provide layer-wise process and machine health monitoring in real time or substantially real time. A layer-wise view of process variable build `vital signs' with SPC metrics is provided using the analytics processor 510 for timely identification of process and machine performance deviations (e.g., layer-wise during a build, etc.). A multi-layer process view can also be provided for one or more geometrically complex areas of concern for a build. Multi-layer analysis provides more insights into particular areas/regions having more complex geometry, while simpler areas of a part may only involve a single layer analysis. The analytics processor 510 enables a mix of single- and multi-layer analysis depending upon part geometry, configuration, monitoring criterion, etc. The analytics processor 510 provides a "one-stop" solution for process monitoring features, sensors, and powder bed/binder applications, for example.

In certain examples, machine health and build quality monitoring are integrated with automated data transfer from the additive machine 100, the controller 120, and/or the meltpool data analyzer 520 (e.g., via the interface 530). On-machine sensors, data transfer, and single layer analysis can provide a layer health score as well as SPC metrics, for example. In certain examples, multi-layer sensor analysis can be used by the analytics processor 510 to determine a trend, detect a change point, etc. Analysis of the analytics processor 510 can be integrated with a modality-specific closed-loop control including recoat monitoring, binder application monitoring, powder bed monitoring (e.g., for shortfeed, protrusion, etc., in combination with gas flow, oxygen content, etc.) etc., for the additive machine 100. In certain examples, a monitored layer can be compared with a reference (e.g., "gold") layer to identify error(s) and/or other difference(s) with the current build. The reference or 'golden' layer may be digitally determined and/or generated from an actual build, for example. For example, CT and/or other imaging can be used to inspect a build and/or build layer and verify its quality and acceptability to be designed as a gold/reference layer/build. In certain examples, a reference or golden build formed of multiple layers can be leveraged. Overall equipment effectiveness (OEE), additive manufacturing machine 100 efficiency, and overall build health quality scoring (e.g., layerwise and multi-layer analysis) can be determined.

As such, machine health can be monitored, evaluated, and addressed using the example system 500. Machine faults can be detected and isolated by the analytics processor 510 (e.g., implemented as one or more processors, FPGAs, other computing devices, etc., to detect and/or predict additive manufacturing machine 100 failure modes from in-situ data). Machine health concerns can include degradation in optical train, recoater, gas flow, laser glass fouling detection, etc. Automatic calibration of the optics (e.g., beam alignment, multi-laser alignment, closed-loop spot size control, power calibration, etc.) can also be driven by machine health monitoring and analysis.

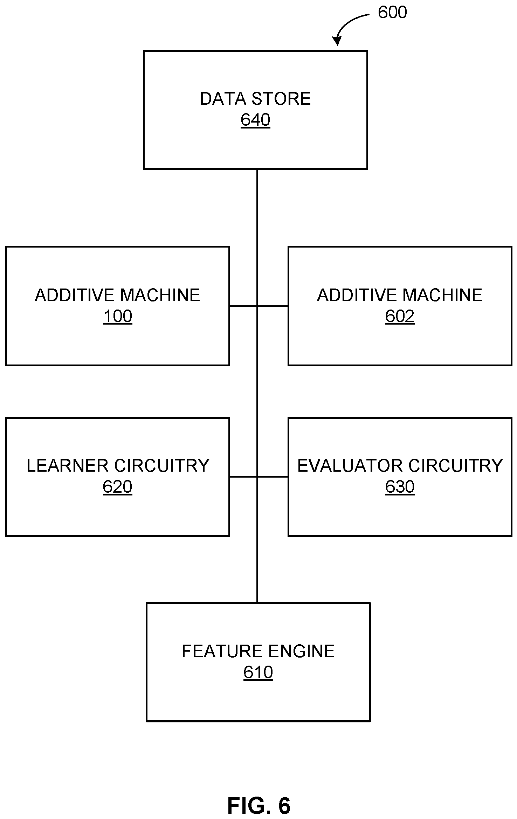

As described above, build and/or additive manufacturing machine health/issue, success/failure, etc., can be monitored and evaluated. Such analysis can be expanded across one or more builds on one or more machines to leverage identification of an issue in one build on one machine and extrapolate causation and effect to a solution on or more future builds on one or more additive manufacturing machines. FIG. 6 illustrates an additive manufacturing machine behavior apparatus or infrastructure 600. The example apparatus or infrastructure 600 includes a plurality of additive manufacturing machines 100, 602, a feature engine 610, learner circuitry 620, evaluator circuitry 630, and a data store 640.

The data store 640 stores one or more log files, sensor data, image(s), etc., captured from the additive manufacturing machines 100, 602, for example. As shown in the example of FIG. 6, data stored in the data storage 610 is ingested by the feature engine 610 to identify features from the stored data. For example, layer features, build features, etc., can be extracted and aggregated for further analysis. Features can be sensor features (e.g., temperature, gas flow, etc.), machine setting features (e.g., dose factor, recoating, lasing, etc.), build features (e.g., total build time, exposure time, recoat time, etc.), etc.

The example learner circuitry 620 processes the log file data and associated features to learn machine behavior using one or more artificial intelligence models (e.g., neural network models, other machine learning models, random forest models, etc.) from a population of builds represented in the data. The learner circuitry 620 learns to distinguish between a standard or normal or acceptable build and a non-standard or anomalous or unacceptable build based on analysis of the available data. The learner circuitry 620 further determines which parameters/settings/conditions contribute to a non-standard build, which contribute to a standard build, etc. The learner circuitry 620 can then train a model based on the population of builds represented in the data and associated learned behaviors, correlating factors, and outcomes. The trained model is then deployed as (part of) the evaluator circuity 630 to evaluate and identify a non-standard (vs. standard) build.

The example evaluator circuitry 630 leverages the deployed, trained model to evaluate a new build against the saved, learned behavior of the population represented by the trained model to assess whether the new build is non-standard. The evaluator circuitry 630 quantifies new build behavior using the trained model and determines which additive manufacturing machine parameters and/or build settings led to such behavior. In certain examples, the learner circuitry 620 is centralized to benefit from training on a variety of build and additive manufacturing machine data, and the evaluator circuitry 630 is a distributed plurality of evaluator circuitries 630 associated with individual additive manufacturing machines 100, 602, etc., and/or associated analytics processors 510 and/or additive machine controllers 120. The evaluator circuitry 630 can diagnose a non-standard build and communicate directly with the additive machine(s) 100, 602 and/or indirectly through their corresponding analytics processor 510 and/or controller 120 to adjust the additive manufacturing machine 100, 602 and/or its build to shift the behavior to standard behavior (e.g., for a successful build).

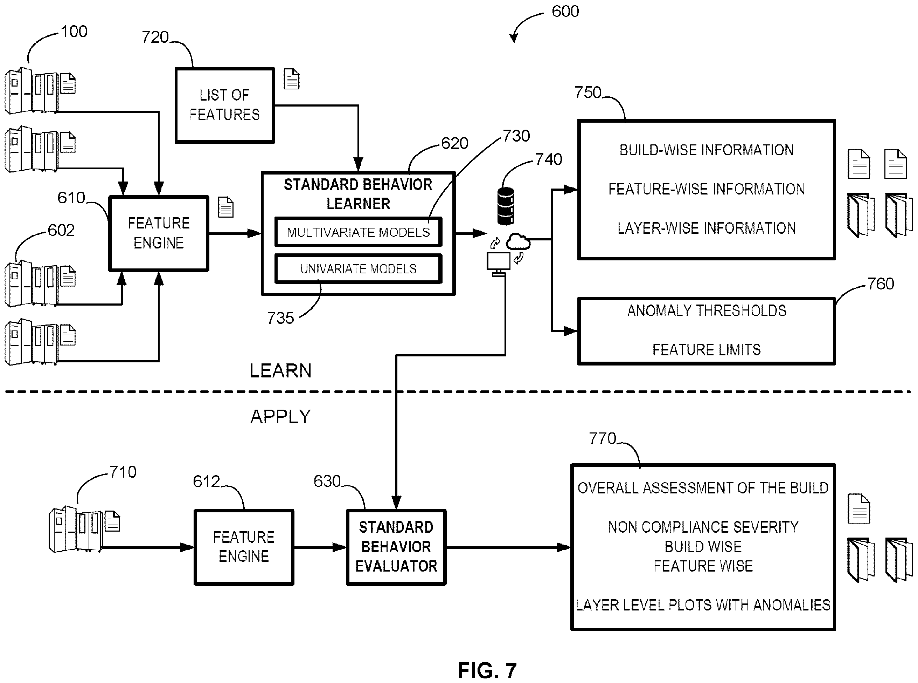

FIGS. 7-8 provide additional views of the example additive manufacturing machine behavior infrastructure 600. In the example of FIG. 7, additive manufacturing machines 100, 602 provide input to the feature engine 610, and the learner circuitry 620 receives data from the machines 100, 602 as processed by the feature engine 610, as well as a list of features 720 with associated known limits (e.g., pump health, filter life, etc.). For example, features and associated limits 720 can include a number of remelts in a layer (e.g., less than two, etc.), a number of consecutive layers with remelts (e.g., less than three, etc.), an average idle time per layer (e.g., less than eleven seconds, etc.), a number of arctrips for a rolling duration often minutes (e.g., less than three, etc.), a smoke indicator such as a count of "zero pulse rakings" succeeding an arctrip (e.g., less than five, etc.), a drift in cathode resistance during a build (e.g., less than 0.03 ohms, etc.), a number of rake stuck events (e.g., less than one, etc.), mean chamber vacuum pressure (e.g., less than 2.5e-3 mbar, etc.).

The learner circuitry 620 trains and/or utilizes one or more multivariate models 730 and one or more univariate models 735, for example. The multivariate model(s) 730 process a combination of features to provide a relative analysis of builds with unsupervised learning (e.g., a combination of k-nearest neighbors (k-NN) anomaly detection with HDBScan clustering, etc.). The univariate model(s) 735 evaluate one feature at a time. For example, the univariate model 735 can fit a feature to a best statistical distribution and extract associated limits associated with a behavior for that feature value. Non-compliance with acceptable limits for the feature can be quantified as a non-compliance severity metric, for example.

As shown in the example of FIG. 7, an output of the multivariate and univariate models 730, 735 is provided to a data store 740 (e.g., the same as, similar to, or different from the example data store 640) and output 750 as build-wise results, such as builds tagged as standard or non-standard, non-compliance severity score, prominent features, machine-wise spread of standard and non-standard results, etc. The output 750 can also include feature-wise results, such as a best fit distribution and associate plots, statistics for each feature (e.g., center, dispersion, quartiles, etc.), feature ranking based on contribution to a non-standard build, list of outlier builds, etc. Feature examples can include a number of remelts in a layer, a number of consecutive layers with remelts, an average idle time per layer, a number of arctrips for a rolling duration of ten minutes, a smoke indicator (e.g., a count of "zero pulse rakings" succeeding an arctrip, a drift in cathode resistance during a build, a number of rake stuck events, mean chamber vacuum pressure, etc.. The output 750 can also include layer-wise information such as a median profile for key features, layer-level plots, etc. Key layer-wise features can include a preheating time per layer, a melt time per layer, etc. Additional output 760 includes anomaly thresholds, feature limits, etc.

Output 750, 760 can be stored in the data store 740, provided to another system, displayed, provided to the evaluator circuitry 630, etc. The evaluator circuitry 630 processes features extracted by a feature engine 612 (e.g., the same as or similar to the feature engine 610) from an additive manufacturing machine 710. The evaluator circuitry 630 leverages information and/or deployed model(s) from the data store 740 to cross-check thresholds, limits, etc., associated with the feature(s). The evaluator circuitry 630 can then generate an overall assessment of the build, layer-level plots with anomalies, and a non-compliance severity metric or score at a build-level (e.g., for an overall build), feature-level (e.g., for particular feature(s) of a build, a feature of a layer of the build, etc.), layer-level (e.g., for a particular layer of a build), etc. A build can then be identified as standard or non-standard and associated features contributing to that categorization can be determined, adjusted, used as feedback/reference, etc.

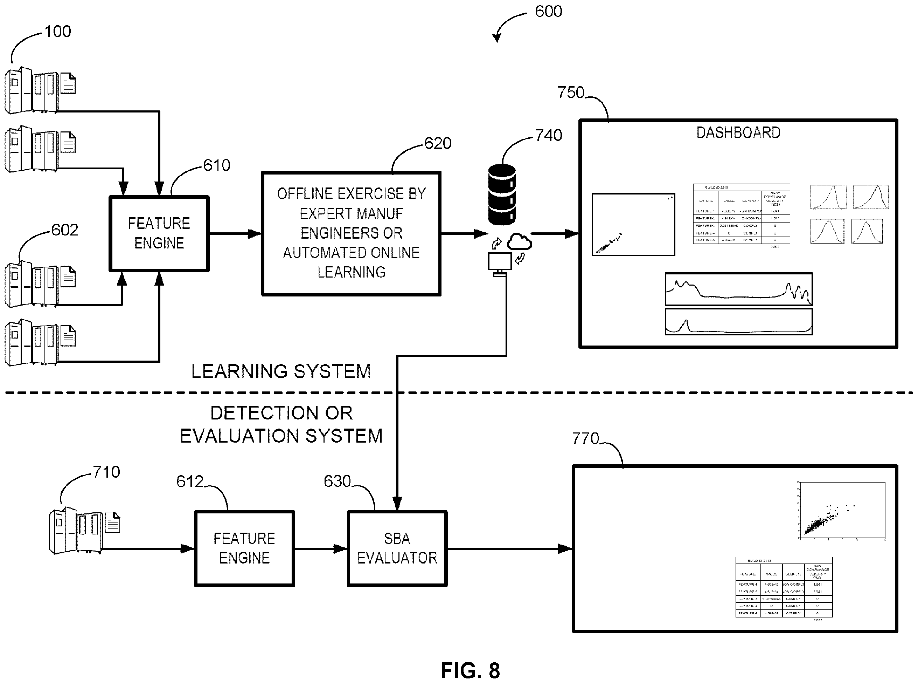

FIG. 8 illustrates another view of the example of FIG. 7, in which the learning circuitry 620 leverages offline experts and/or automated online learning for multiple build/machine populations, based on features extracted from additive manufacturing machines 100, 602 by the feature engine 610. Learned output and associated model(s) can be stored in the data store 740 and provided as output 750, such as an interactive dashboard enabling selection of a population to see an associated behavior, use the behavior as a reference and/or feedback, adjust the associated build/machine, etc. Further, the evaluator circuitry 630 pulls from the reference population behaviors of the data store 740 to process features of a new build extracted from the additive manufacturing machine 710 by the feature engine 612. The evaluator circuitry 630 outputs 770 a behavior of the new build in comparison to behavior of a population or reference set of builds to assess whether the build is standard or non-standard. The evaluator circuitry 630 also generates an explanation including a total non-compliance severity score, a number of non-complying features, a highest/greatest contributing feature, etc.

For example, an evaluated build in which a beam component of the additive manufacturing machine 710 has shown anomalous operating behavior can indicate that a number of arctrip events and/or a drift in cathode resistance are top contributors for non-compliance of the build. In an example, in which a recoat system of the additive manufacturing machine 710 behaved anomalously can indicate that features such as mean idle time and/or rake stuck events show as high contributors to non-compliance of the build.

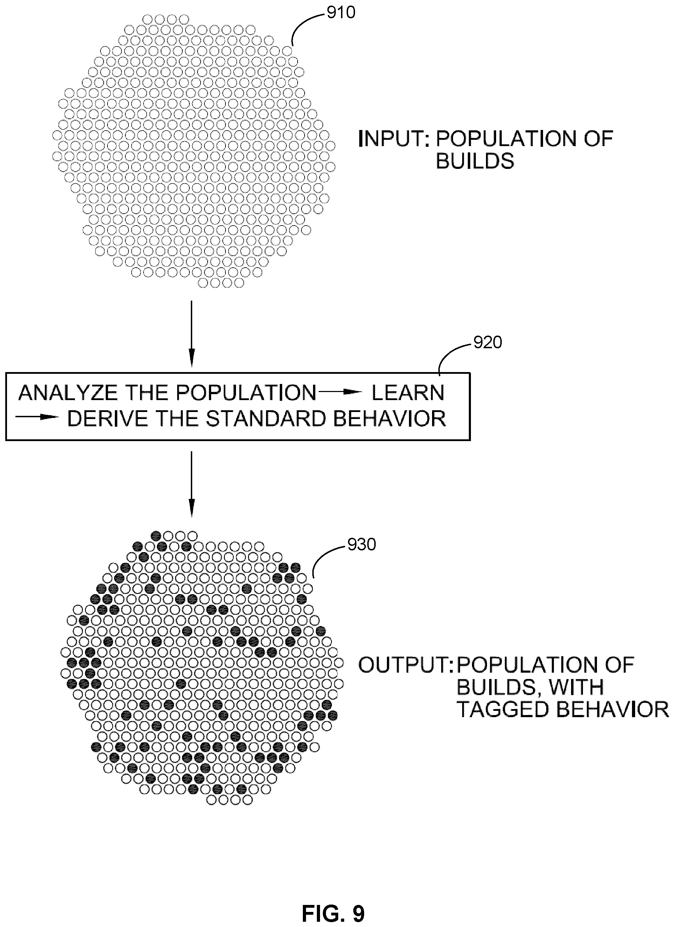

As such, the learner circuitry 620 processes a population of build and additive manufacturing machine data to train a plurality of models (e.g., multivariate and univariate models) to form a deployable build behavior model construct with the evaluator circuitry 630 to determine whether a build is a standard build or a non-standard build. As depicted in the example of FIG. 9, a population of builds 910 is provided to the learner circuitry 620. The learner circuitry 620 analyzes the population 910, learns patterns and correlations in the population data, and derives a standard build behavior 920 from the population 910. The learner circuitry 620 can output a population of builds with tagged behavior 930. The tagged population output 930 identifies standard builds, non-standard builds, etc., and can be used by the evaluator circuitry 630 on new build data to determine whether the build is a standard build, a non-standard build, and why (e.g., which factor(s) contributed most to making the build non-standard, etc.), for example.

While example implementations of the additive machine 100, the additive machine controller 120, the analytics processor 510, the meltpool data acquisition processor 520, the feature engine 610, the learner circuitry 620, the evaluator circuitry 630, the data store 640, etc., are illustrated in FIGS. 1-9, one or more of the elements, processes and/or devices may be combined, divided, re-arranged, omitted, eliminated and/or implemented in any other way. Further, one or more of the elements of FIGS. 1-9 may be implemented by hardware, software, firmware and/or any combination of hardware, software and/or firmware. Thus, for example, any of the example elements of FIGS. 1-9 can be implemented by one or more analog or digital circuit(s), logic circuits, programmable processor(s), programmable controller(s), graphics processing unit(s) (GPU(s)), video processing unit(s) (VPU(s)), accelerator card(s), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example elements of FIGS. 1-7 is/are hereby expressly defined to include a non-transitory computer readable storage device or storage disk such as a memory, a digital versatile disk (DVD), a compact disk (CD), a Blu-ray disk, etc. including the software and/or firmware. Further still, the elements of FIGS. 1-9 may include one or more elements, processes and/or devices in addition to, or instead of, those illustrated in FIGS. 1-9, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

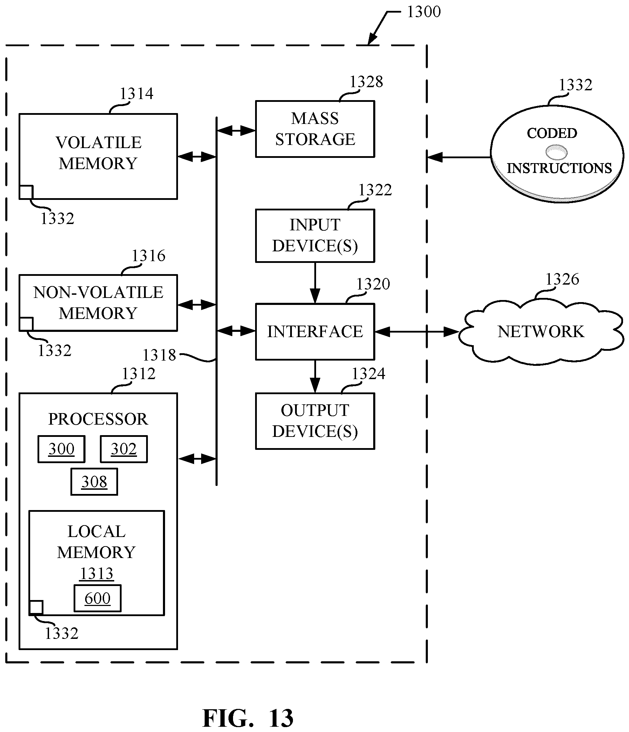

Flowcharts representative of example hardware logic, machine readable instructions, hardware implemented state machines, and/or any combination thereof for implementing all or portions of the example additive manufacturing machine behavior apparatus or infrastructure 600 are shown in FIGS. 10. The machine readable instructions may be one or more executable programs or portion(s) of an executable program for execution by a computer processor and/or processor circuitry, such as the example learner circuitry 620, the example evaluator circuitry 630, and/or the example processor platform 1300 discussed below in connection with FIG. 13. The program may be embodied in software stored on a non-transitory computer readable storage medium such as a CD-ROM, a floppy disk, a hard drive, a DVD, a Blu-ray disk, or a memory associated with the processor 1312, but the entire program and/or parts thereof could alternatively be executed by a device other than the processor 1312 and/or embodied in firmware or dedicated hardware. Further, although the example program is described with reference to the flowcharts illustrated in FIGS. 10-12, many other methods of implementing all or portions of the example additive manufacturing machine behavior apparatus or infrastructure 600 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example process(es) of FIGS. 10-12 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 10 is a flow diagram of an example method 1000 for monitoring, determining, and adjusting health of a machine, process, and/or build, such as using the example learner circuitry 620 and the example evaluator circuitry 630. At block 1010, data for a population of builds on or more additive manufacturing machines 100, 602 is processed. For example, build data is ingested and formed according to identified features, format, time series organization, etc. At block 1020, behaviors are learned from the processed data. For example, data for multiple builds (e.g., multiple builds at a single site, across multiple sites, at the same machine, across multiple machines, etc.) are analyzed to learn which builds behaved as expected, which builds behaved in unexpected ways, which builds had particular issues, which builds had particular solutions, which builds had other outcomes, etc.

For example, the learner circuitry 620 reads in logfiles of a given population of builds and learns machine behavior associated with those builds by doing a relative analyses of just those population of builds using unsupervised machine learning and statistical methods. This enables finding the non-standard builds within the population and key machine parameters that led to this behavior.

At block 1030, reference standard and non-standard behaviors are generated. For example, based on the build and machine behavior learned by the example learner circuitry 620, the learner circuitry 620 can generate a standard reference behavior for a successful or otherwise normal build as well as generate a non-standard reference behavior for an unsuccessful build. The standard reference behavior and the non-standard reference behavior can be used for comparison of other builds, for example. As such, the standard reference behavior and the non-standard reference behavior can be stored in digital form for use by the evaluator circuitry 630.

At block 1040, a composite model is generated to evaluate and classify builds. The composite model is trained by the standard reference behavior and the non-standard reference behavior, for example. By training and testing the model using known/verified standard and non-standard behavior, the model can be used to classify a new build as standard or non-standard based on quantified behaviors reflected in the model. In certain examples, machine parameters that led to such behavior can also be identified. Identification of machine parameters and/or parameter values can be important to remedy a non-standard build/machine behavior, for example.

Thus, the composite model can identify and interpret variation at a build level, system, subsystem level (e.g., beam subsystem, etc.), etc. The composite model can be deployed across various populations (e.g., current builds, builds of the past six months, builds of the past year, etc.). The composite model can be trained and tested for a variety of additive manufacturing machine fleets (e.g., DMI,M, EBM, BinderJet, etc.).

At block 1050, the composite model is deployed with the example evaluator circuitry 630. For example, the composite model is deployed as part of the example evaluator circuitry 630 to evaluate one or more ongoing builds, prior builds, etc. The composite model and/or associated reference standard and non-standard build behaviors can also be stored in a reference database, such as the data store 640, 740, for access by the evaluator circuitry 630. At block 1060, new build data is processed to identify whether build is standard or non-standard. For example, the evaluator circuitry 630 receives build data from one or more of the additive machines 100, 602, the data store 640, the feature engine 610, etc. The evaluator circuitry 630 provides the data to the composite model to determine whether the build is non-standard or qualifies as standard according to the modeled behavior. By applying learned, modeled thresholds, limits, etc., to the build, one or more features and/or the overall build can be assessed to identify current issue(s), predict future issue(s), etc., as well as an associated severity, for example.

At block 1070, for a non-standard build, factor(s) contributing to the build being non-standard are identified. For example, when a build is identified as non-standard in comparison to the learned non-standard build behaviors of the composite model, one or more factors, features, etc., that appear to contribute to the non-standard behavior of the build are identified (e.g., pre-heating, post-heating, melt time, etc.). Identification of contributing factor(s) can be used to drive solution(s) to the non-standard build behavior (e.g., for the particular machine used for the build, other machines of the same type, other builds, etc.).

At block 1080, a designation is output for the build. For example, the evaluator circuitry 630 outputs a designation or identification that the build is a standard or conforming build (e.g., a build that meet or conforms to its configuration, quality metric(s), etc.) or that the build is a non-standard or non-conforming build (e.g., a build that does not meet its configuration, does not satisfy associated quality metric(s), has failed, etc.).

At block 1090, when the build is identified as non-standard, a corrective action is output. For example, based on identification of one or more contributing factors/features driving the non-standard behavior, associated solution(s) can be generated. In certain examples, corrective instructions are logged and transmitted to an operator for adjustment. In other examples, corrective instructions are executed by the additive machine 100, 602, the additive machine controller 120, etc., to adjust the machine to correct the build. In some instances, the non-standard build is considered failed and is scrapped. In other instances, the non-standard build can be salvaged and/or otherwise corrected in process through execution of the corrective instructions. For example, proactive maintenance, automated changes to configuration/settings, etc., can be triggered based on detection of anomalous (e.g., non-standard) behavior in the build before the part goes bad.

At block 1095, if present, available feedback is evaluated to improve the model. For example, feedback from the additive machine 100, 602, the additive machine controller 120, etc., can be captured and provided to the learner circuitry 620 to adjust the composite model.

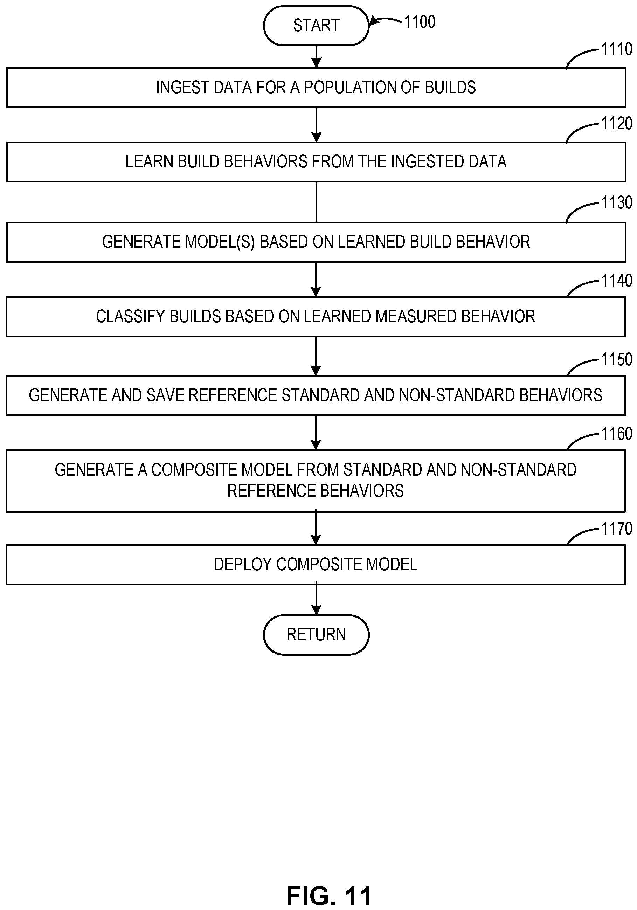

FIG. 11 provides further example detail regarding the learning and model building of the example learner circuitry 620 described above. At block 1110, data for a population of builds is ingested by the learner circuitry 620. For example, log files, sensor data, other input from one or more additive machines 100, 602, additive machine controller 120, etc., is gathered for processing by the learner circuitry 620. In certain examples, log files from a population of builds (e.g., collected over a year, a few months, etc.) are processed by the feature engine 610, which processes the log files to extract information, convert the information into features, and consolidate the features (e.g., issue in a layer, vacuum, pre-heating, post-heating, etc.) into multivariate and univariate models for the learner circuitry 620 (e.g., consolidating hundreds of builds' data into two sets of models for the learner circuitry 620, etc.). Models can be formed according to identified features, format, time series organization, etc.

Multivariate and univariate models are complimentary and can be used together. Multivariate models are employed to capture non-linear relation-ships in multi-dimensional space encompassing various parameters, resulting in identification of zones of standard behavior in a high dimensional space. Univariate models provide an ease of interpretation which enables identification of top contributors to a non-standard build behavior, which the system can then act to rectify. For example, for an evaluator build, each parameter is assessed individually for a non-compliance score based on its incidence relative to limits deduced from known standard behavior, and then scores are combined in a linear weighted approach.

At block 1120, the learner circuitry 620 learns build behavior from the ingested data. For example, the learner circuitry 620 processes the data (e.g., processes consolidated features formed from the data, etc.) to learn build behavior by evaluating and classifying the build behavior. The features can be analyzed individually and/or in combination to organize and learn build behavior in the population of data available to the learner circuitry 620.

At block 1130, the learner circuitry 620 generates models and/or other analyses based on the learned build behavior. For example, multivariate models can be generated to evaluate multiple features with respect to each other and flag builds as standard or non-standard based on the comparison, for example. Univariate models look at individual features such as melt time, etc., that have a normal value or range, and a value for a build can be compared to the normal value/range. In the comparison, a degree of variation from the norm/range can be evaluated (e.g., how far off from normal melt time was a certain build, etc.).

For example, a build can be represented by a set of features (e.g., a collection of one hundred builds can each be represented by ten features, etc.). The learner circuitry 620 can construct distributions for each feature and extract limits from each distribution. The learner circuitry 620 learns that values beyond the limits are undesirable for that feature. The learner circuitry 620 can also determine how far beyond a limit the value is.

A univariate model output can be fit into a multivariate model output to determine which builds are standard and which builds are non-standard, along with a severity or extent of non-standard behavior. Features contributing to the non-standard behavior can be identified. As such, behavior can be identified at a build level (e.g., which builds) as well as at a feature level (e.g., which features, distribution, ranking, etc.). Particular feature(s) can be isolated for their impact on standard versus non-standard build behavior. Layer-level analysis can also be conducted to form a median profile for key features, for example.

In certain examples, a multivariate model is trained using unsupervised learning (e.g., without prior knowledge of what is good and what is bad, etc.). Techniques such as K-NN anomaly detection, HDBScan clustering, etc., can be employed to identify and cluster indicators or features of certain behavior. Anomaly score(s) (e.g., at least two different scores, etc.) can be calculated. For example, ten nearest neighbors can be identified, and a distance between neighbors correlates to a score (1, 10, etc.) based on the distance to the nearest neighbor with an anomaly, etc. Builds with a high anomaly score are clustered or classified as non-standard builds. To categorize or separate such builds from others, HDBScan clustering can then be used to filter out noise and cluster ones that are reasonably similar. If not similar, then other builds are treated as noise by the HDBScan. Clusters of reasonably similar builds can be formed, and a parameter or characteristic defining a cluster can become a threshold by which to evaluate a build and determine whether the build fits in a certain cluster (e.g., is non-standard or standard). These thresholds are saved to evaluate a new build later.

If a build is standard, then its associated anomaly score is low (e.g., 1, 2, etc.). As such, if an anomaly score is less than two, the build is classified or treated as a standard build. A zone of standard builds and a zone of non-standard builds are defined by looking at all features together at once. If a build does not fall in either zone (standard or non-standard), then the build can be flagged for further review, for example.

At block 1140, the learner circuitry 620 classifies builds based on the learned and measured behavior of the historical data set. The classification can form a set of standard build behaviors and a set of non-standard build behaviors. A degree or measure of severity or behavioral contribution can be associated with builds, build feature(s), etc. For example, one feature may more significantly contribute to a build's standard or non-standard behavior than another feature.

At block 1150, reference standard and non-standard behaviors are generated and saved for later use. For example, based on classification and scoring of features of the population of builds, a "gold standard", normal, or reference behavior can be generated and stored for training of a composite model and application by the evaluator circuitry 630. Similarly, a non-standard, abnormal, or anomalous reference behavior can be generated and stored by the learner circuitry 620 based on the classification and scoring of features of the population of builds. As with the standard reference behavior, the non-standard reference behavior can be used to train the composite model and be applied by the evaluator circuitry 630 to received build data.

At block 1160, the composite model is generated from the standard and non-standard reference behaviors. For example, the composite model can be an AI model trained and tested using both standard and non-standard reference behaviors such that the composite model can distinguish between standard and non-standard behavior and identify non-standard behavior, for example, in a new build. By training and testing the composite model using known/verified standard and non-standard behavior, the composite model can be used to classify a new build as standard or non-standard based on quantified behaviors reflected in the composite model. In certain examples, machine parameters that led to such behavior can also be identified by the composite model based on its training from identified behaviors and associated build data. Identification of machine parameters and/or parameter values can be important to remedy a non-standard build/machine behavior, for example.

As such, the trained, tested, and deployed composite model can identify and interpret variation at a build level, system, subsystem level (e.g., beam subsystem, etc.), etc. The composite model can be deployed across various populations (e.g., current builds, builds of the past six months, builds of the past year, etc.). The composite model can be trained and tested for a variety of additive manufacturing machine fleets (e.g., DMI,M, EBM, BinderJet, etc.).

At block 1170, the composite model is deployed to the evaluator circuitry 630 and/or otherwise stored, output, etc. The composite model and/or associated standard and non-standard behavior reference information can be stored in the data store 640, 740 for use by the evaluator circuitry 630, for example. The evaluator circuitry 630 can use the composite model to classify a build as standard or non-standard, identify contributing/causational factor(s) to a non-standard build, and output a corrective action for a non-standard build.

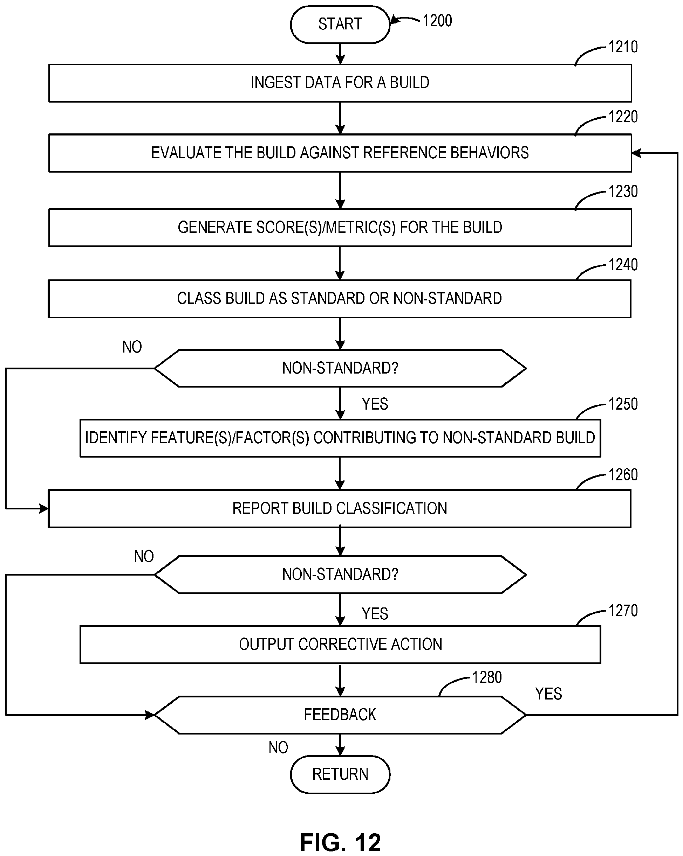

FIG. 12 provides further example detail regarding the evaluation of a build by the example evaluator circuitry 630 described above. At block 1210, build data is ingested by the evaluator circuitry 630. For example, build configuration/setting information, sensor data, images, control events, build metadata, before and after recoat images, meltpool time-series data, log files, other sensor values, etc., are provided to the evaluator circuitry 630 directly and/or through the data storage 610. The evaluator circuitry 630 can process raw sensor values, images, machine settings, build parameters, etc., to form features (e.g., leveraging the feature engine 612) for processing by the composite model.

For example, the feature extractor 612 can extract one or more features from settings, sensor statistics, build events, physics/domain-based features, etc., for the evaluator circuitry 630. Features can related to events, filtering, inerting, lasing, recoating, etc. Features can be based on numeric values, attributes, etc. Features can be based on maximum/minimum values, mean, time-weighted average, specific recorded values, standard deviation, etc.

At block 1220, the evaluator circuitry 630 evaluates the build against reference behaviors. The build data is evaluated at the build level, the layer level, and/or at an element level with respect to the reference behaviors stored in the data store 640, 740, for example. One or more features can be evaluated and compared to multivariate and univariate aspects of the composite model. A score (e.g., an anomaly score, etc.) can be calculated representing a distance between the feature of the build under review and the corresponding feature of the composite model, for example.

At block 1230, one or more score or metric is/are generated by the evaluator circuitry 630 for the build. For example, a non-compliance severity metric is generated by the evaluator circuitry 630. A plurality of anomaly scores can be combined into a severity metric indicating a noncompliance with a standard build and/or a noncompliance with respect to a particular feature, setting, characteristic, etc. In certain examples, property-based severity scores are summed (e.g., the farther beyond an associate zone/range, the higher the severity of the deficiency) to form a build-level severity score. For example, a set of five features can be combined for two builds to determine severity.

At block 1240, the build is classified as standard or non-standard based at least in part on the score/metric. For example, when the build has a low non-compliance severity metric (e.g., 0.05, 0.1, etc.), then the build is classified as a standard build. When the build has a high non-compliance severity metric, then the build is classified as a non-standard build.

For example, a low non-compliance severity metric of 3.0 can be enforced to tag builds as 'definitely Standard'. Conversely, a high non-compliance severity metric of 10.0 can be used as a guideline to identify abnormal builds. In certain examples, other metrics are further relied upon to arrive at a "Non-Standard Build" tag. For example, a build can be assessed from a reference frame containing 25 features, where 3 of those features (e.g., melting duration, raking duration, column temperature) contribute a score 2.1, 1.3, and 1.2, respectively, to the total non-compliance severity metric, for a total non-compliance severity metric of 4.5. Such a score could be considered probably standard or undetermined, for example.

A range or threshold for the non-compliance severity metric generally depends on the "non-standard behavior" being modeled. For example, multiple features (e.g., three features, four features, etc.) in a combination not previously seen can drive a determination of non-standard behavior, as reflected in a high non-compliance severity metric. An abnormal value of a physics feature, for example, can drive a high non-compliance severity metric. This intent influences selection of parameters/features which, in turn, leads to selection of optimal threshold on a case-by-case basis. A threshold for non-compliance severity can be chosen in conjunction with other classification methods (e.g., a KNN-based anomaly score and region free from noisy cluster data from an HDBScan approach, etc.). For example, a physics feature

At block 1250, when the build is classified as a non-standard build, one or more features/factors that contributed to the determination of the non-standard build are identified. For example, one or more features having a non-compliance severity metric and/or anomaly score above a threshold can be identified as contributors to the classification as a non-standard build.

At block 1260, the classification of the build is reported. For example, an output indicating that the build has been classified as a standard or non-standard build is generated. The output can include an indication of the severity of a non-standard build, for example. The indication of severity can also be associated with one or more features that caused and/or otherwise contributed to the build being classified as non-standard. As such, the output classification of a build can include an overall assessment of the build, one or more build and/or feature severity scores, layer-level plots, etc. In certain examples, a non-compliance severity metric can be computed, such as at a feature level, to quantify the behavior variation of the build (e.g., the behavior variation of the associated additive machine 100, 602 during the build, etc.).

At block 1270, if the build is classified as a non-standard build, a corrective action is output. For example, an adjustment to one or more parameters of the ongoing build can be provided to the associated additive machine 100, 602, associated controller 120, etc. In certain examples, predictive maintenance can be ordered to remedy an identified issue in the additive machine 100, 602 resulting in a non-standard build (or a build that is barely standard but trending toward non-standard build behavior, for example). In some examples, depending on the severity of the anomaly/non-standard build, a command can be sent to cancel the build. In certain examples, an interactive display is provided in which a user can visibly view the build score as well as associated features so that the user can view, select, and understand which features contributed to non-standard behavior. Adjustments can then be made via the graphical user interface, for example.

In some examples, at block 1280, feedback can be gathered based on continuation of a build after parameter/setting adjustment, post-mortem review of a canceled build, user override, etc. Such feedback can modify behavior of the evaluator circuitry 630, for example.

FIG. 13 is a block diagram of an example processor platform 1300 structured to execute the instructions of FIGS. 10-12 to implement the example learner circuitry 620, evaluator circuitry 630, etc. The processor platform 1300 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, or any other type of computing device.

The processor platform 1300 of the illustrated example includes a processor 1312. The processor 1312 of the illustrated example is hardware. For example, the processor 1312 can be implemented by one or more integrated circuits, logic circuits, microprocessors, GPUs, DSPs, or controllers from any desired family or manufacturer. The hardware processor may be a semiconductor based (e.g., silicon based) device.

The processor 1312 of the illustrated example includes a local memory 1313 (e.g., a cache and/or other memory circuitry). The processor 1312 of the illustrated example is in communication with a main memory/memory circuitry including a volatile memory 1314 and a non-volatile memory 1316 via a bus 1318. The volatile memory 1314 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 1316 may be implemented by flash memory and/or any other desired type of memory device/memory circuitry. Access to the main memory 1314, 1316 is controlled by a memory controller.

The processor platform 1300 of the illustrated example also includes an interface circuit 1320. The interface circuit 1320 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 1322 are connected to the interface circuit 1320. The input device(s) 1322 permit(s) a user to enter data and/or commands into the processor 1312. The input device(s) can be implemented by, for example, an audio sensor, a microphone, a camera (still or video), a keyboard, a button, a mouse, a touchscreen, a track-pad, a trackball, and/or a voice recognition system.

One or more output devices 1324 are also connected to the interface circuit 1320 of the illustrated example. The output devices 1324 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, and/or speaker. The interface circuit 1320 of the illustrated example, thus, typically includes a graphics driver card, a graphics driver chip and/or a graphics driver processor.

The interface circuit 1320 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1326. The communication can be via, for example, an Ethernet connection, a digital subscriber line (DSL) connection, a telephone line connection, a coaxial cable system, a satellite system, a line-of-site wireless system, a cellular system, etc.

The processor platform 1300 of the illustrated example also includes one or more mass storage devices 1328 for storing software and/or data. Examples of such mass storage devices 1328 include floppy disk drives, hard drive disks, compact disk drives, Blu-ray disk drives, redundant array of independent disks (RAID) systems, and digital versatile disk (DVD) drives.

The machine executable instructions 1332 of FIGS. 10-12 may be stored in the mass storage device 1328, in the volatile memory 1314, in the non-volatile memory 1316, and/or on a removable non-transitory computer readable storage medium such as a CD or DVD.

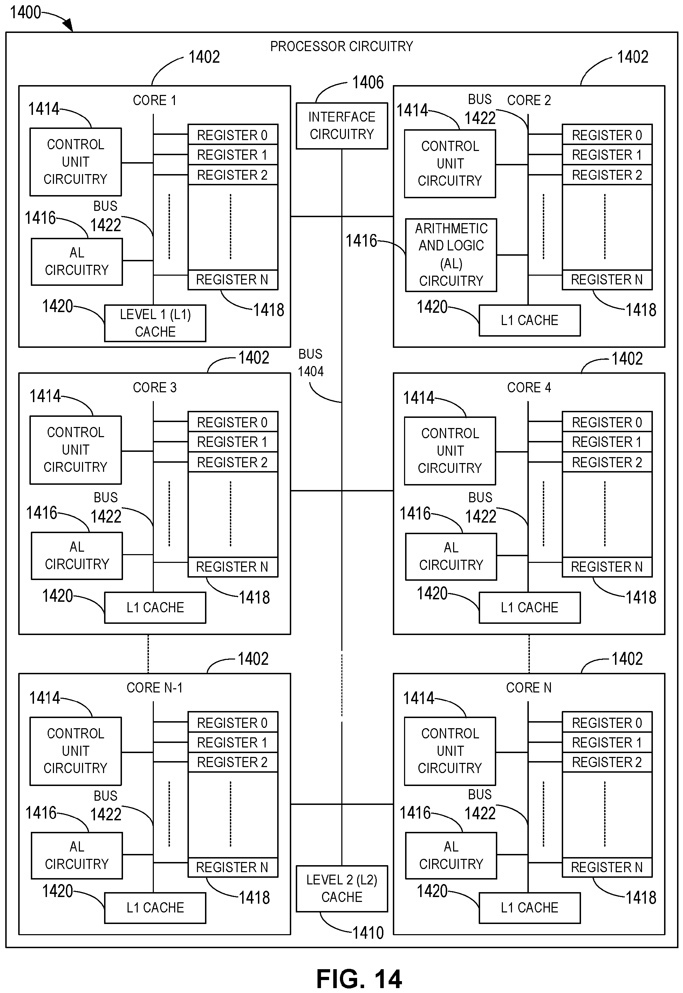

FIG. 14 is a block diagram of an example implementation of the processor circuitry 1312 of FIG. 13. In this example, the processor circuitry 1312 of FIG. 13 is implemented by a microprocessor 1400. For example, the microprocessor 1400 may implement multi-core hardware circuitry such as a CPU, a DSP, a GPU, an XPU, etc. Although it may include any number of example cores 1402 (e.g., 1 core), the microprocessor 1400 of this example is a multi-core semiconductor device including N cores. The cores 1402 of the microprocessor 1400 may operate independently or may cooperate to execute machine readable instructions. For example, machine code corresponding to a firmware program, an embedded software program, or a software program may be executed by one of the cores 1402 or may be executed by multiple ones of the cores 1402 at the same or different times. In some examples, the machine code corresponding to the firmware program, the embedded software program, or the software program is split into threads and executed in parallel by two or more of the cores 1402. The software program may correspond to a portion or all of the machine readable instructions and/or operations represented by the flowcharts of FIGS. 10-12.

The cores 1402 may communicate by an example bus 1404. In some examples, the bus 1404 may implement a communication bus to effectuate communication associated with one(s) of the cores 1402. For example, the bus 1404 may implement at least one of an Inter-Integrated Circuit (I2C) bus, a Serial Peripheral Interface (SPI) bus, a PCI bus, or a PCIe bus. Additionally or alternatively, the bus 1404 may implement any other type of computing or electrical bus. The cores 1402 may obtain data, instructions, and/or signals from one or more external devices by example interface circuitry 1406. The cores 1402 may output data, instructions, and/or signals to the one or more external devices by the interface circuitry 1406. Although the cores 1402 of this example include example local memory 1420 (e.g., Level 1 (L1) cache that may be split into an L1 data cache and an L1 instruction cache), the microprocessor 1400 also includes example shared memory 1410 that may be shared by the cores (e.g., Level 2 (L2_ cache)) for highspeed access to data and/or instructions. Data and/or instructions may be transferred (e.g., shared) by writing to and/or reading from the shared memory 1410. The local memory 1420 of each of the cores 1402 and the shared memory 1410 may be part of a hierarchy of storage devices including multiple levels of cache memory and the main memory (e.g., the main memory 1314, 1316 of FIG. 13). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1402 may be referred to as a CPU, DSP, GPU, etc., or any other type of hardware circuitry. Each core 1402 includes control unit circuitry 1414, arithmetic and logic (AL) circuitry (sometimes referred to as an ALU) 1416, a plurality of registers 1418, the L1 cache 1420, and an example bus 1422. Other structures may be present. For example, each core 1402 may include vector unit circuitry, single instruction multiple data (SINM) unit circuitry, load/store unit (LSU) circuitry, branch/jump unit circuitry, floating-point unit (FPU) circuitry, etc. The control unit circuitry 1414 includes semiconductor-based circuits structured to control (e.g., coordinate) data movement within the corresponding core 1402. The AL circuitry 1416 includes semiconductor-based circuits structured to perform one or more mathematic and/or logic operations on the data within the corresponding core 1402. The AL circuitry 1416 of some examples performs integer based operations. In other examples, the AL circuitry 1416 also performs floating point operations. In yet other examples, the AL circuitry 1416 may include first AL circuitry that performs integer based operations and second AL circuitry that performs floating point operations. In some examples, the AL circuitry 1416 may be referred to as an Arithmetic Logic Unit (ALU). The registers 1418 are semiconductor-based structures to store data and/or instructions such as results of one or more of the operations performed by the AL circuitry 1416 of the corresponding core 1402. For example, the registers 1418 may include vector register(s), SIMD register(s), general purpose register(s), flag register(s), segment register(s), machine specific register(s), instruction pointer register(s), control register(s), debug register(s), memory management register(s), machine check register(s), etc. The registers 1418 may be arranged in a bank as shown in FIG. 14. Alternatively, the registers 1418 may be organized in any other arrangement, format, or structure including distributed throughout the core 1402 to shorten access time. The bus 1422 may implement at least one of an I2C bus, a SPI bus, a PCI bus, or a PCIe bus.

Each core 1402 and/or, more generally, the microprocessor 1400 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1400 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

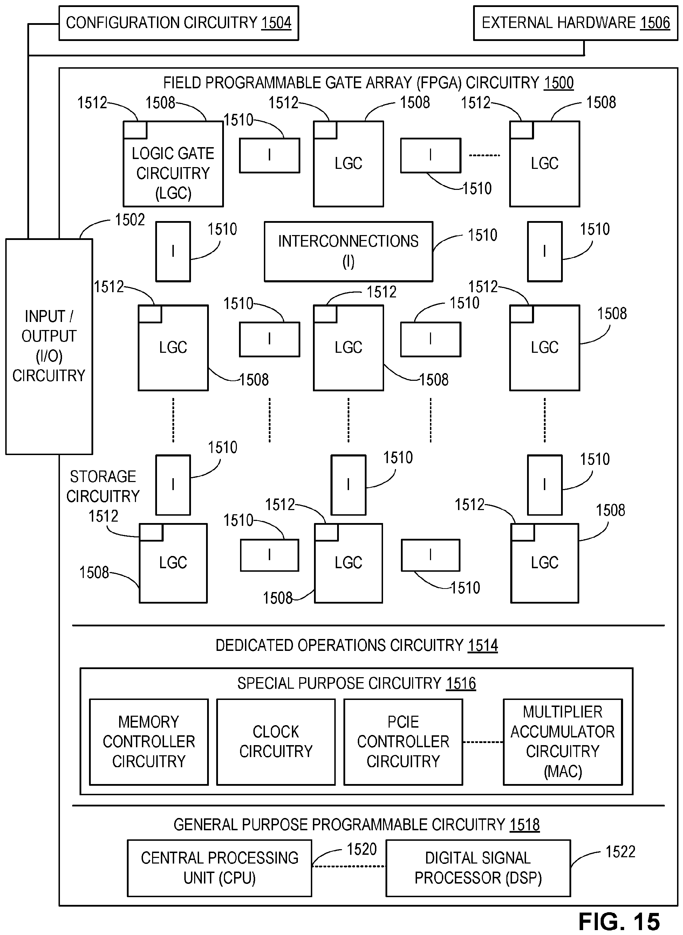

FIG. 15 is a block diagram of another example implementation of the processor circuitry 1312 of FIG. 13. In this example, the processor circuitry 1312 is implemented by FPGA circuitry 1500. The FPGA circuitry 1500 can be used, for example, to perform operations that could otherwise be performed by the example microprocessor 1400 of FIG. 14 executing corresponding machine readable instructions. However, once configured, the FPGA circuitry 1500 instantiates the machine readable instructions in hardware and, thus, can often execute the operations faster than they could be performed by a general purpose microprocessor executing the corresponding software.

More specifically, in contrast to the microprocessor 1400 of FIG. 14 described above (which is a general purpose device that may be programmed to execute some or all of the machine readable instructions represented by the flowcharts of FIGS. 10-12 but whose interconnections and logic circuitry are fixed once fabricated), the FPGA circuitry 1500 of the example of FIG. 15 includes interconnections and logic circuitry that may be configured and/or interconnected in different ways after fabrication to instantiate, for example, some or all of the machine readable instructions represented by the flowcharts of FIGS. 10-12. In particular, the FPGA 1500 may be thought of as an array of logic gates, interconnections, and switches. The switches can be programmed to change how the logic gates are interconnected by the interconnections, effectively forming one or more dedicated logic circuits (unless and until the FPGA circuitry 1500 is reprogrammed). The configured logic circuits enable the logic gates to cooperate in different ways to perform different operations on data received by input circuitry. Those operations may correspond to some or all of the software represented by the flowcharts of FIGS. 10-12. As such, the FPGA circuitry 1500 may be structured to effectively instantiate some or all of the machine readable instructions of the flowcharts of FIGS. 10-12 as dedicated logic circuits to perform the operations corresponding to those software instructions in a dedicated manner analogous to an ASIC. Therefore, the FPGA circuitry 1500 may perform the operations corresponding to the some or all of the machine readable instructions of FIGS. 10-12 faster than the general purpose microprocessor can execute the same.

In the example of FIG. 15, the FPGA circuitry 1500 is structured to be programmed (and/or reprogrammed one or more times) by an end user by a hardware description language (HDL) such as Verilog. The FPGA circuitry 1500 of FIG. 15, includes example input/output (I/O) circuitry 1502 to obtain and/or output data to/from example configuration circuitry 1504 and/or external hardware (e.g., external hardware circuitry) 1506. For example, the configuration circuitry 1504 may implement interface circuitry that may obtain machine readable instructions to configure the FPGA circuitry 1500, or portion(s) thereof. In some such examples, the configuration circuitry 1504 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1506 may implement the microprocessor 1400 of FIG. 14. The FPGA circuitry 1500 also includes an array of example logic gate circuitry 1508, a plurality of example configurable interconnections 1510, and example storage circuitry 1512. The logic gate circuitry 1508 and interconnections 1510 are configurable to instantiate one or more operations that may correspond to at least some of the machine readable instructions of FIGS. 10-12 and/or other desired operations. The logic gate circuitry 1508 shown in FIG. 15 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1508 to enable configuration of the electrical structures and/or the logic gates to form circuits to perform desired operations. The logic gate circuitry 1508 may include other electrical structures such as look-up tables (LUTs), registers (e.g., flip-flops or latches), multiplexers, etc.

The interconnections 1510 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1508 to program desired logic circuits.

The storage circuitry 1512 of the illustrated example is structured to store result(s) of the one or more of the operations performed by corresponding logic gates. The storage circuitry 1512 may be implemented by registers or the like. In the illustrated example, the storage circuitry 1512 is distributed amongst the logic gate circuitry 1508 to facilitate access and increase execution speed.

The example FPGA circuitry 1500 of FIG. 15 also includes example Dedicated Operations Circuitry 1514. In this example, the Dedicated Operations Circuitry 1514 includes special purpose circuitry 1516 that may be invoked to implement commonly used functions to avoid the need to program those functions in the field. Examples of such special purpose circuitry 1516 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1500 may also include example general purpose programmable circuitry 1518 such as an example CPU 1520 and/or an example DSP 1522. Other general purpose programmable circuitry 1518 may additionally or alternatively be present such as a GPU, an XPU, etc., that can be programmed to perform other operations.

As such, the example FPGA circuitry 1500 can be used to (re)align and/or calibrate multi-laser alignment, stitching, other aspect of additive build execution, programming, etc., In certain examples, the FPGA circuitry 1500 can be used for scoring and data processing, together and/or in further combination with hyper-logging of data/events in situations where the model output identifies deviation from an expected standard. Such additional data gathered during hyper-logging can include additional sensor data and high frequency sub-second controls outputs for troubleshooting and investigation, for example.

Although FIGS. 14 and 15 illustrate two example implementations of the processor circuitry 1312 of FIG. 13, many other approaches are contemplated. For example, as mentioned above, modern FPGA circuitry may include an on-board CPU, such as one or more of the example CPU 1520 of FIG. 15. Therefore, the processor circuitry 1312 of FIG. 13 may additionally be implemented by combining the example microprocessor 1400 of FIG. 14 and the example FPGA circuitry 1500 of FIG. 15. In some such hybrid examples, a first portion of the machine readable instructions represented by the flowcharts of FIGS. 10-12 may be executed by one or more of the cores 1402 of FIG. 14 and a second portion of the machine readable instructions represented by the flowcharts of FIGS. 10-12 may be executed by the FPGA circuitry 1500 of FIG. 15.

A block diagram illustrating an example software distribution platform 1605 to distribute software such as the example machine readable instructions 1332 of FIG. 13 to other hardware devices (e.g., hardware devices owned and/or operated by third parties from the owner and/or operator of the software distribution platform) is illustrated in FIG. 16. The example software distribution platform 1605 may be implemented by any computer server, data facility, cloud service, etc., capable of storing and transmitting software to other computing devices. The third parties may be customers of the entity owning and/or operating the software distribution platform 1605. For example, the entity that owns and/or operates the software distribution platform 1605 may be a developer, a seller, and/or a licensor of software such as the example machine readable instructions 1332 of FIG. 13. The third parties may be consumers, users, retailers, OEMs, etc., who purchase and/or license the software for use and/or re-sale and/or sub-licensing. In the illustrated example, the software distribution platform 2105 includes one or more servers and one or more storage devices. The storage devices store the machine readable instructions 1332, which may correspond to the example machine readable instructions of FIGS. 10-12, as described above. The one or more servers of the example software distribution platform 1605 are in communication with an example network 1610, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1332 from the software distribution platform 1605. For example, the software, which may correspond to the example machine readable instructions of FIGS. 10-12, may be downloaded to the example programmable circuitry platform 1300, which is to execute the machine readable instructions 1332 to implement all or part of the example additive manufacturing machine behavior apparatus 600, etc. In some examples, one or more servers of the software distribution platform 1605 periodically offer, transmit, and/or force updates to the software (e.g., the example machine readable instructions 1332 of FIG. 13) to ensure improvements, patches, updates, etc., are distributed and applied to the software at the end user devices. Although referred to as software above, the distributed "software" could alternatively be firmware.

It should now be understood that that the devices, systems, and methods described herein monitor, determine, and adjust health of an additive manufacturing device and/or an associated process, build, etc. The systems and methods ingest data, manage state, process analytics, and generate an actionable output for layer-wise, build-wise, and machine-wise adjustment. Such monitoring, processing, and adjustment is not possible manually and relies on an analytics processor to achieve. In addition, the systems and methods according to the present disclosure enhances the accuracy of diagnosing builds and/or additive manufacturing device by determining and reacting to specific and overall health of the machine, process, and/or build.

Further aspects are provided by the subject matter of the following clauses:
An example apparatus includes learner circuitry to: process first data from a set of first builds to learn behavior from the set of first builds; classify each build of the set of first builds as a standard build or a non-standard build; model the learned behavior to form a standard reference behavior and a non-standard reference behavior, the standard reference behavior including first features and the non-standard reference behavior including second features; and output the standard reference behavior and the non-standard reference behavior to classify additional builds. The example apparatus includes evaluator circuitry to: ingest second data for a second build; process the second data in comparison to the standard reference behavior and the non-standard reference behavior; classify the second build as a standard build or a non-standard build; and, when the second build is classified as a non-standard build, output a corrective action to address at least one second feature of the non-standard build behavior associated with the second build.

The apparatus of the preceding clause, further including memory circuitry to store the standard reference behavior and the non-standard reference behavior.

The apparatus of any preceding clause, wherein the standard reference behavior and the non-standard reference behavior form a composite model, the composite model deployed for use by the evaluator circuitry to classify the second build.

The apparatus of any preceding clause, wherein the learner circuitry is to build and process at least one univariate model and at least one multivariate model to form the standard reference behavior and the non-standard reference behavior.

The apparatus of any preceding clause, wherein the set of first builds are from one or more additive manufacturing machines.

The apparatus of any preceding clause, wherein the second build is an ongoing build on an additive manufacturing machine.

The apparatus of any preceding clause, wherein the first features and the second features include build-level features and layer-level features.

The apparatus of any preceding clause, wherein the learner circuitry is to compute a non-compliance severity metric to classify a build as a standard build or a non-standard build, the non-compliance severity metric based on scores associated with the first features and the second features, the non-compliance severity metric enabling identification of one or more of the second features contributing to the classification as a non-standard build.

An example non-transitory computer-readable medium includes instructions that, when executed by processor circuitry, cause the processor circuitry to at least: process first data from a set of first builds to learn behavior from the set of first builds; classify each build of the set of first builds as a standard build or a non-standard build; model the learned behavior to form a standard reference behavior and a non-standard reference behavior, the standard reference behavior including first features and the non-standard reference behavior including second features; output the standard reference behavior and the non-standard reference behavior to classify additional builds; ingest second data for a second build; process the second data in comparison to the standard reference behavior and the non-standard reference behavior; classify the second build as a standard build or a non-standard build; and, when the second build is classified as a non-standard build, output a corrective action to address at least one second feature of the non-standard reference behavior associated with the second build.

The non-transitory computer-readable medium of any preceding clause, wherein the processor circuitry includes learner circuitry and evaluator circuitry, the learner circuitry to store the standard reference behavior and the non-standard reference behavior for use by the evaluator circuitry to classify the second build.

The non-transitory computer-readable medium of any preceding clause, wherein the standard reference behavior and the non-standard reference behavior form a composite model, the composite model deployed to classify the second build.

The non-transitory computer-readable medium of any preceding clause, wherein the processor circuitry is to build and process at least one univariate model and at least one multivariate model to form the standard reference behavior and the non-standard reference behavior.

The non-transitory computer-readable medium of any preceding clause, wherein the set of first builds are from one or more additive manufacturing machines.

The non-transitory computer-readable medium of any preceding clause, wherein the second build is an ongoing build on an additive manufacturing machine.

The non-transitory computer-readable medium of any preceding clause, wherein the first features and the second features include build-level features and layer-level features.

The non-transitory computer-readable medium of any preceding clause, wherein the processor circuitry is to compute a non-compliance severity metric to classify a build as a standard build or a non-standard build, the non-compliance severity metric based on scores associated with the first features and the second features, the non-compliance severity metric enabling identification of one or more of the second features contributing to the classification as a non-standard build.

An example method for analyzing and managing builds in one or more additive manufacturing machines includes: processing, by executing an instruction using processor circuitry, first data from a set of first builds to learn behavior from the set of first builds; classifying, by executing an instruction using the processor circuitry, each build of the set of first builds as a standard build or a non-standard build; modeling, by executing an instruction using the processor circuitry, the learned behavior to form a standard reference behavior and a non-standard reference behavior, the standard reference behavior including first features and the non-standard reference behavior including second features; outputting, by executing an instruction using the processor circuitry, the standard reference behavior and the non-standard reference behavior to classify additional builds; ingesting, by executing an instruction using the processor circuitry, second data for a second build; processing, by executing an instruction using the processor circuitry, the second data in comparison to the standard reference behavior and the non-standard reference behavior; classifying, by executing an instruction using the processor circuitry, the second build as a standard build or a non-standard build; and, when the second build is classified as a non-standard build, outputting, by executing an instruction using the processor circuitry, a corrective action to address at least one second feature of the non-standard reference behavior associated with the second build.

18. The method of any preceding clause, further including forming a composite model with the standard reference behavior and the non-standard reference behavior, the composite model deployed to classify the second build.

The method of any preceding clause, wherein classifying further includes building and processing at least one univariate model and at least one multivariate model to form the standard reference behavior and the non-standard reference behavior.

The method of any preceding clause, further including computing a non-compliance severity metric to classify a build as a standard build or a non-standard build, the non-compliance severity metric based on scores associated with the first features and the second features, the non-compliance severity metric enabling identification of one or more of the second features contributing to the classification as a non-standard build.

While particular examples have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. An apparatus comprising:
learner circuitry (620) to:
process first data from a set of first builds to learn behavior from the set of first builds;
classify each build of the set of first builds as a standard build or a non-standard build;
model the learned behavior to form a standard reference behavior and a non-standard reference behavior, the standard reference behavior including first features and the non-standard reference behavior including second features; and
output the standard reference behavior and the non-standard reference behavior to classify additional builds; and
evaluator circuitry (630) to:
ingest second data for a second build;
process the second data in comparison to the standard reference behavior and the non-standard reference behavior;
classify the second build as a standard build or a non-standard build; and
when the second build is classified as a non-standard build, output a corrective action to address at least one second feature of the non-standard build behavior associated with the second build.

2. The apparatus of claim 1, further including memory circuitry (610) to store the standard reference behavior and the non-standard reference behavior.

3. The apparatus of claim 1, wherein the standard reference behavior and the non-standard reference behavior form a composite model, the composite model deployed for use by the evaluator circuitry to classify the second build.

4. The apparatus of claim 1, wherein the learner circuitry (620) is to build and process at least one univariate model and at least one multivariate model to form the standard reference behavior and the non-standard reference behavior.

5. The apparatus of claim 1, wherein the set of first builds are from one or more additive manufacturing machines (100, 602, 710).

6. The apparatus of claim 1, wherein the second build is an ongoing build on an additive manufacturing machine (100, 602, 710)..

7. The apparatus of claim 1, wherein the first features and the second features include build-level features and layer-level features.

8. The apparatus of claim 1, wherein the learner circuitry (620) is to compute a non-compliance severity metric to classify a build as a standard build or a non-standard build, the non-compliance severity metric based on scores associated with the first features and the second features, the non-compliance severity metric enabling identification of one or more of the second features contributing to the classification as a non-standard build.

9. A method (1000) for analyzing and managing builds in one or more additive manufacturing machines (100, 602, 710), the method (1000) comprising:
processing, by executing an instruction using processor circuitry (1300), first data from a set of first builds to learn behavior from the set of first builds;
classifying, by executing an instruction using the processor circuitry (1300), each build of the set of first builds as a standard build or a non-standard build;
modeling, by executing an instruction using the processor circuitry (1300), the learned behavior to form a standard reference behavior and a non-standard reference behavior, the standard reference behavior including first features and the non-standard reference behavior including second features;
outputting, by executing an instruction using the processor circuitry (1300), the standard reference behavior and the non-standard reference behavior to classify additional builds;
ingesting, by executing an instruction using the processor circuitry (1300), second data for a second build;
processing, by executing an instruction using the processor circuitry (1300), the second data in comparison to the standard reference behavior and the non-standard reference behavior;
classifying, by executing an instruction using the processor circuitry (1300), the second build as a standard build or a non-standard build; and
when the second build is classified as a non-standard build, outputting, by executing an instruction using the processor circuitry (1300), a corrective action to address at least one second feature of the non-standard reference behavior associated with the second build.

10. The method (1000) of claim 9, further including forming a composite model with the standard reference behavior and the non-standard reference behavior, the composite model deployed to classify the second build.

11. The method (1000) of claim 9, wherein classifying further includes building and processing at least one univariate model and at least one multivariate model to form the standard reference behavior and the non-standard reference behavior.

12. The method (1000) of claim 9, further including computing a non-compliance severity metric to classify a build as a standard build or a non-standard build, the non-compliance severity metric based on scores associated with the first features and the second features, the non-compliance severity metric enabling identification of one or more of the second features contributing to the classification as a non-standard build.

13. A non-transitory computer-readable medium (304, 404, 1313, 1314, 1316, 1328) comprising instructions that, when executed by processor circuitry (1300), cause the processor circuitry (1300) to at least execute the method (1000) of any of claims 9-12.
